# EUROPEAN PATENT SPECIFICATION

(11) **EP 4 415 108 B1**
(45) Date of publication and mention of the grant of the patent: **23.09.2026**
(21) Application number: 23769442.7
(22) Date of filing: 17.01.2023
(51) Int. Cl.: H01M 10/0587, H01M 10/04, H01M 50/533, B65H 18/10, H01M 4/139, H01M 10/0525, H01M 50/107

(54) **WINDING APPARATUS AND METHOD**
WICKELVORRICHTUNG UND -VERFAHREN
APPAREIL ET PROCÉDÉ D'ENROULEMENT

(30) Priority: 18.03.2022 CN 202210271281
(43) Date of publication of application: 14.08.2024
(73) Proprietor: Contemporary Amperex Technology (Hong Kong) Limited, Central, Central And Western District (HK)
(72) Inventor: WANG, Peichao, Ningde City, Fujian 352100 (CN); LI, Xiaoyuan, Ningde City, Fujian 352100 (CN); XIE, Chao, Ningde City, Fujian 352100 (CN); HUANG, Guoda, Ningde City, Fujian 352100 (CN); WANG, Yiruo, Ningde City, Fujian 352100 (CN); HU, Shengsheng, Ningde City, Fujian 352100 (CN); ZHAO, Wankui, Ningde City, Fujian 352100 (CN); LIN, Gang, Ningde City, Fujian 352100 (CN); CHEN, Yaojin, Ningde City, Fujian 352100 (CN)
(74) Representative: Ran, Handong
(86) International application number: PCT/CN2023/072552
(87) International publication number: WO 2023/173931

(56) References cited:
- CN-A- 102 017 242
- CN-A- 103 715 390
- CN-A- 107 946 663
- CN-A- 109 802 164
- CN-A- 109 802 164
- CN-A- 111 370 748
- CN-A- 112 768 742
- CN-U- 218 039 357
- CN-U- 218 333 916
- JP-A- 2004 281 127
- JP-A- H08 115 850
- US-A1- 2011 131 799
- US-A1- 2020 203 712

## Description

### TECHNICAL FIELD

Some embodiments of this application relate to the field of mechanics, and in particular, to a winding device and a winding method.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

Generally, a battery includes one or more battery cells. Each battery cell includes an electrode assembly. The electrode assembly includes a positive electrode plate, a negative electrode plate, and a separator. In some related technologies, the positive electrode plate, negative electrode plate, and separator can be wound by a winding device to form a jelly-roll electrode assembly. How to improve the processing efficiency of the winding device for electrode assemblies to increase the production capacity of batteries is an urgent technical problem.

CN112768742A discloses a winding device according to the preamble of claim 1 and a winding method according to claim 10.

### SUMMARY

This application provides a winding device and method to improve the processing efficiency of the winding device for electrode assemblies to increase the production capacity of batteries.

According to a first aspect of the invention, a winding device according to claim 1 is provided, including: a first unwinding apparatus, configured to output a first electrode plate; a first cutting apparatus, disposed downstream of the first unwinding apparatus, and configured to cut the first electrode plate into a first part and a second part along a length direction of the first electrode plate; and a winding apparatus, disposed downstream of the first cutting apparatus, and including a first winding portion and a second winding portion capable of simultaneous winding movement. The first winding portion is configured to wind the first part of the first electrode plate to form a first electrode assembly. The second winding portion is configured to wind the second part of the first electrode plate to form a second electrode assembly.

Based on the technical solution disclosed, two electrode assemblies can be produced simultaneously by using only one first unwinding apparatus in coordination with the first cutting apparatus and the winding apparatus in the winding device. The winding device is efficient in manufacturing electrode assemblies, without requiring a large footprint in the shop floor, thereby improving the ratio of the footprint to the production capacity of the winding device, and increasing the maximum production capacity of the shop floor.

In some possible embodiments, the first electrode plate includes a first substrate and two first active coating regions applied to surfaces of the first substrate. The two first active coating regions are located on two sides of the first electrode plate in a width direction respectively. A first tab region extending along a length direction of the first electrode plate exists between the two first active coating regions. The first cutting apparatus is configured to perform cutting in the first tab region along the length direction of the first electrode plate, so as to cut the first electrode plate into the first part and the second part.

Based on the technical solutions disclosed in these embodiments, the first electrode plate includes two first active coating regions and a first tab region located between the two first active coating regions. The first electrode plate is different from a conventional individual electrode plate configured to manufacture a single electrode assembly. The first electrode plate includes two electrode plates (that is, the first part and the second part obtained by cutting) configured to manufacture two electrode assemblies. The first electrode plate can be produced by the same coating process. In contrast to a technical solution in which two individual electrode plates are produced by two coating processes separately, the production efficiency of the first electrode plate in the technical solutions hereof is higher.

In some possible embodiments, the first cutting apparatus includes: a first cutting portion and a second cutting portion. The first cutting portion is configured to perform cutting in the first tab region, so as to form at least one tab of the first part of the first electrode plate. The second cutting portion is configured to perform cutting in the first tab region, so as to form at least one tab of the second part of the first electrode plate.

Based on the technical solutions disclosed in these embodiments, the first cutting portion and the second cutting portion are disposed in the first cutting apparatus, so as to produce, in response to specific needs, the tab of the first part of the first electrode plate and the tab of the second part of the first electrode plate, which are of a smaller size and a higher precision, thereby not only facilitating the subsequent manufacturing process of the electrode assembly such as tab processing in the wound electrode assembly, but also improving the overall performance of the electrode assembly.

In some possible embodiments, the winding device further includes: a first adjustment assembly and/or a second adjustment assembly, disposed between the first cutting apparatus and the winding apparatus, where the first adjustment assembly is configured to adjust transmission parameters of the first part of the first electrode plate in the winding device, and/or, the second adjustment assembly is configured to adjust transmission parameters of the second part of the first electrode plate in the winding device.

In the technical solutions in these embodiments, the transmission parameters of the first part and/or the second part of the first electrode plate are adjusted by the first adjustment assembly and/or the second adjustment assembly. In this way, the transmission of the first part and/or the second part in the winding device is more stable. In addition, the subsequent winding effect of the first part and/or the second part in the winding apparatus is improved, thereby improving the overall performance of the two produced electrode assemblies.

In some possible embodiments, the first adjustment assembly and the second adjustment assembly include: a realignment assembly, where the realignment assembly in the first adjustment assembly is configured to adjust a relative position of the first part of the first electrode plate in the winding device, and the realignment assembly in the second adjustment assembly is configured to adjust a relative position of the second part of the first electrode plate in the winding device; and/or the first adjustment assembly and the second adjustment assembly include: a tension adjustment assembly, where the tension adjustment assembly in the first adjustment assembly is configured to detect and adjust tension of the first part of the first electrode plate, and the tension adjustment assembly in the second adjustment assembly is configured to detect and adjust tension of the second part of the first electrode plate.

In the technical solutions in these embodiments, the realignment assembly and the tension adjustment assembly are disposed in both the first adjustment assembly and the second adjustment assembly. In this way, the two realignment assemblies and the two tension adjustment assemblies can more pertinently adjust the relative positions and tension of the first part and the second part of the first electrode plate in the winding device separately. The adjustment result is more accurate, thereby improving the winding effect of the first part and the second part of the first electrode plate in the winding apparatus.

In some possible embodiments, the winding device further includes: a first feeding portion and a second feeding portion, disposed upstream of the winding apparatus. The first feeding portion is configured to convey the first part of the first electrode plate to the first winding portion of the winding apparatus. The second feeding portion is configured to convey the second part of the first electrode plate to the second winding portion of the winding apparatus.

In the technical solutions in these embodiments, the two parts of the first electrode plate are processed by the two feeding portions respectively. In this way, the two parts of the first electrode plate can enter the two winding portions in the winding apparatus respectively in a more stable and reliable manner, thereby improving the winding effect of the two parts of the first electrode plate, and in turn, improving the performance of the two produced electrode assemblies.

In some possible embodiments, the first feeding portion includes: a first moving roller, a first driving member, and a first transmission member. The second feeding portion includes: a second moving roller, a second driving member, and a second transmission member. The first driving member is configured to drive the first moving roller to press and attach the first part of the first electrode plate to the first transmission member. The first transmission member is configured to convey the first part of the first electrode plate to the first winding portion. The second driving member is configured to drive the second moving roller to press and attach the second part of the first electrode plate to the second transmission member. The second transmission member is configured to convey the second part of the first electrode plate to the second winding portion.

In the technical solutions in these embodiments, the first feeding portion and the second feeding portion each include a moving roller, a driving member, and a transmission member, and are easy to implement in overall structure and highly reliable, and can convey the two parts of the first electrode plate into the winding apparatus smoothly and efficiently.

According to the invention, the winding device further includes: a second unwinding apparatus, configured to output a second electrode plate; a second cutting apparatus, disposed downstream of the second unwinding apparatus, and configured to cut the second electrode plate into a first part and a second part along a length direction of the second electrode plate; and the winding apparatus, disposed downstream of the second cutting apparatus. The first winding portion is configured to wind the first part of the first electrode plate and the first part of the second electrode plate to form the first electrode assembly. The second winding portion is configured to wind the second part of the first electrode plate and the second part of the second electrode plate to form the second electrode assembly.

Based on the technical solutions disclosed, two electrode assemblies can be produced simultaneously by using only one first unwinding apparatus and one second unwinding apparatus in coordination with the first cutting apparatus, the second cutting apparatus, and the winding apparatus in the winding device. The winding device is efficient in manufacturing electrode assemblies, and can further reduce the footprint required in the shop floor, thereby further improving the ratio of the footprint to the production capacity of the winding device, and increasing the maximum production capacity of the shop floor.

In some possible embodiments, the second electrode plate includes a second substrate and a second active coating region applied to a surface of the second substrate. A second tab region extending along a length direction of the second electrode plate exists on each of two sides of the second active coating region in a width direction of the second electrode plate. The second cutting apparatus is configured to perform cutting in the second active coating region along the length direction of the second electrode plate, so as to cut the second electrode plate into the first part and the second part.

Based on the technical solutions disclosed in these embodiments, the second electrode plate includes a second active coating region and two second tab regions located on the two sides of the second active coating region respectively. The second electrode plate is different from a conventional individual electrode plate configured to manufacture a single electrode assembly. The second electrode plate includes two electrode plates (that is, the first part and the second part obtained by cutting) configured to manufacture two electrode assemblies. The second electrode plate can be produced by the same coating process. In contrast to a technical solution in which two individual electrode plates are produced by two coating processes separately, the production efficiency of the second electrode plate in the technical solutions hereof is higher.

In some possible embodiments, the winding device further includes: a third adjustment assembly and/or a fourth adjustment assembly, disposed between the second cutting apparatus and the winding apparatus. The third adjustment assembly is configured to adjust transmission parameters of the first part of the second electrode plate in the winding device, and/or, the fourth adjustment assembly is configured to adjust transmission parameters of the second part of the second electrode plate in the winding device.

In the technical solutions in these embodiments, the transmission parameters of the first part and/or the second part of the second electrode plate are adjusted by the third adjustment assembly and/or the fourth adjustment assembly respectively. In this way, the transmission of the first part and/or the second part in the winding device is more stable. In addition, the subsequent winding effect of the first part and/or the second part in the winding apparatus is improved, thereby improving the overall performance of the two produced electrode assemblies.

In some possible embodiments, the third adjustment assembly and the fourth adjustment assembly include: a realignment assembly, where the realignment assembly in the third adjustment assembly is configured to adjust a relative position of the first part of the second electrode plate in the winding device, and the realignment assembly in the fourth adjustment assembly is configured to adjust a relative position of the second part of the second electrode plate in the winding device; and/or the third adjustment assembly and the fourth adjustment assembly include: a tension adjustment assembly, where the tension adjustment assembly in the third adjustment assembly is configured to detect and adjust tension of the first part of the second electrode plate, and the tension adjustment assembly in the fourth adjustment assembly is configured to detect and adjust tension of the second part of the second electrode plate.

In some possible embodiments, the winding device further includes: two second unwinding apparatuses, where each second unwinding apparatus in the two second unwinding apparatuses is configured to output a second electrode plate; and the winding apparatus, disposed downstream of the two second unwinding apparatuses. The first winding portion is configured to wind the first part of the first electrode plate and the second electrode plate from one of the second unwinding apparatuses to form the first electrode assembly, and the second winding portion is configured to wind the second part of the first electrode plate and the second electrode plate from the other second unwinding apparatus to form the second electrode assembly.

In the technical solutions in these embodiments, the winding device includes two second unwinding apparatuses. The second electrode plate disposed on the two second unwinding apparatuses is an electrode plate in a single electrode assembly, and does not need to be cut. In these embodiments, the positions of the two second electrode plates output by the two second unwinding apparatuses do not need to be much adjusted subsequently, and the two second electrode plates can coordinate with the two parts of the first electrode plate to undergo a winding process and form two electrode assemblies. Therefore, based on such technical solutions, the transmission of the second electrode plate in the winding device is more stable, and the performance and yield rate of the electrode assemblies produced by the winding device are improved.

In some possible embodiments, the second electrode plate includes a second substrate and a second active coating region applied to a surface of the second substrate. A second tab region extending along a length direction of the second electrode plate exists on one side of the second active coating region in a width direction of the second electrode plate.

According to the invention, the winding device further includes: two third unwinding apparatuses, where each third unwinding apparatus in the two third unwinding apparatuses is configured to output a first separator; two fourth unwinding apparatuses, where each fourth unwinding apparatus in the two fourth unwinding apparatuses is configured to output a second separator; the winding apparatus, disposed downstream of the two third unwinding apparatuses and the two fourth unwinding apparatuses. The first winding portion is configured to wind the first part of the first electrode plate, the first separator from one of the third unwinding apparatuses, and the second separator from one of the fourth unwinding apparatuses to form the first electrode assembly. The second winding portion is configured to wind the second part of the first electrode plate, the first separator from the other third unwinding apparatus, and the second separator from the other fourth unwinding apparatus to form the second electrode assembly.

In the technical solution, two first separators are output by two third unwinding apparatuses, and two second separators are output by two fourth unwinding apparatuses. The two first separators and the two second separators can be conveyed to the two winding portions in the winding apparatus simultaneously, so as to be wound synchronously with the two parts of the first electrode plate to form two electrode assemblies of stable performance that can operate reliably. The manufacturing efficiency of the electrode assemblies is relatively high.

In some possible embodiments, the winding device further includes: a first combining apparatus, disposed between the two third unwinding apparatuses and the winding apparatus, where the first combining apparatus includes two first rotating portions disposed on a same roller, the two first rotating portions correspond one-to-one to the two third unwinding apparatuses and the two winding portions in the winding apparatus, and each of the first rotating portions is configured to convey the first separator from a corresponding third unwinding apparatus to a corresponding winding portion; and/or a second combining apparatus, disposed between the two fourth unwinding apparatuses and the winding apparatus. The second combining apparatus includes two second rotating portions disposed on a same roller. The two second rotating portions correspond one-to-one to the two fourth unwinding apparatuses and the two winding portions in the winding apparatus. Each of the second rotating portions is configured to convey the second separator from a corresponding fourth unwinding apparatus to a corresponding winding portion.

Based on the technical solutions disclosed in these embodiments, the two first separators can be conveyed to the two winding portions in the winding apparatus by the same first combining apparatus. Similarly, the two second separators can also be conveyed to the two winding portions in the winding apparatus by the same second combining apparatus. In these embodiments, it is not necessary to convey the two first separators to the winding apparatus separately by using a plurality of apparatuses, and it is not necessary to convey the two second separators to the winding apparatus separately by using a plurality of apparatuses, thereby reducing the number of apparatuses in the winding device, and further reducing the footprint of the winding device in the shop floor.

In some possible embodiments, the winding device further includes: two fifth adjustment assemblies, corresponding one-to-one to the two third unwinding apparatuses, and disposed between the first combining apparatus and the two third unwinding apparatuses, where each of the fifth adjustment assemblies is configured to adjust transmission parameters of the first separator in the winding device; and/or two sixth adjustment assemblies, corresponding one-to-one to the two fourth unwinding apparatuses, and disposed between the second combining apparatus and the two fourth unwinding apparatuses, where each of the sixth adjustment assemblies is configured to adjust transmission parameters of the second separator in the winding device.

In the technical solutions in these embodiments of this application, the transmission parameters of the first separator and/or the second separator are adjusted by the fifth adjustment assembly and/or the sixth adjustment assembly. In this way, the transmission of the first separator and/or the second separator in the winding device is more stable. In addition, the subsequent winding effect of the first separator and/or the second separator in the winding apparatus is improved, thereby improving the overall performance of the two produced electrode assemblies.

In some possible embodiments, the fifth adjustment assembly and the sixth adjustment assembly include: a tension adjustment assembly, where the tension adjustment assembly in the fifth adjustment assembly is configured to detect and adjust tension of the first separator, and the tension adjustment assembly in the sixth adjustment assembly is configured to detect and adjust tension of the second separator.

According to a second aspect of the invention, a winding method according to claim 10 is provided, including: outputting a first electrode plate; cutting the first electrode plate into a first part and a second part along a length direction of the first electrode plate; and winding the first part of the first electrode plate to form a first electrode assembly, and at the same time, winding the second part of the first electrode plate to form a second electrode assembly.

In some possible embodiments, the first electrode plate includes a first substrate and two first active coating regions applied to surfaces of the first substrate. The two first active coating regions are located on two sides of the first electrode plate in a width direction respectively. A first tab region extending along a length direction of the first electrode plate exists between the two first active coating regions. The cutting the first electrode plate into a first part and a second part along a length direction of the first electrode plate includes: performing cutting in the first tab region along the length direction of the first electrode plate, so as to cut the first electrode plate into the first part and the second part.

In some possible embodiments, the performing cutting in the first tab region along the length direction of the first electrode plate, so as to cut the first electrode plate into the first part and the second part includes: performing cutting in the first tab region along a first cutting line that extends in the length direction of the first electrode plate, so as to obtain the first part of the first electrode plate and form at least one tab of the first part of the first electrode plate; and performing cutting in the first tab region along a second cutting line that extends in the length direction of the first electrode plate, so as to obtain the second part of the first electrode plate and form at least one tab of the second part of the first electrode plate.

According to the invention, the winding method further includes: outputting a second electrode plate; and cutting the second electrode plate into a first part and a second part along a length direction of the second electrode plate. The winding the first part of the first electrode plate to form a first electrode assembly, and at the same time, winding the second part of the first electrode plate to form a second electrode assembly, include: winding the first part of the first electrode plate and the first part of the second electrode plate to form the first electrode assembly, and at the same time, winding the second part of the first electrode plate and the second part of the second electrode plate to form the second electrode assembly.

In some possible embodiments, the second electrode plate includes a second substrate and a second active coating region applied to a surface of the second substrate. A second tab region extending along a length direction of the second electrode plate exists on each of two sides of the second active coating region in a width direction of the second electrode plate. The cutting the second electrode plate into a first part and a second part along a length direction of the second electrode plate includes: performing cutting in the second active coating region along the length direction of the second electrode plate, so as to cut the second electrode plate into the first part and the second part.

In some possible embodiments, the winding method further includes: outputting two second electrode plates. The winding the first part of the first electrode plate to form a first electrode assembly, and at the same time, winding the second part of the first electrode plate to form a second electrode assembly, include: winding the first part of the first electrode plate and one second electrode plate in the two second electrode plates to form the first electrode assembly, and at the same time, winding the second part of the first electrode plate and the other second electrode plate in the two second electrode plates to form the second electrode assembly.

In some possible embodiments, the second electrode plate includes a second substrate and a second active coating region applied to a surface of the second substrate. A second tab region extending along a length direction of the second electrode plate exists on one side of the second active coating region in a width direction of the second electrode plate.

Based on the technical solution disclosed in an embodiment of this application, two electrode assemblies can be produced simultaneously by using only one first unwinding apparatus in coordination with the first cutting apparatus and the winding apparatus in the winding device. The winding device is efficient in manufacturing electrode assemblies, without requiring a large footprint in the shop floor, thereby improving the ratio of the footprint to the production capacity of the winding device, and increasing the maximum production capacity of the shop floor.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application.
FIG. 1 is a schematic structural diagram of a battery cell according to an embodiment of this application;
FIG. 2 is a schematic structural diagram of a winding device according to an embodiment of this application.
FIG. 3 is a schematic diagram of a first electrode plate before and after cutting according to an embodiment of this application;
FIG. 4 is a schematic diagram of cutting a first electrode plate by a first cutting apparatus according to an embodiment of this application;
FIG. 5 is another schematic structural diagram of a winding device according to an embodiment of this application;
FIG. 6 is a schematic structural diagram of a first feeding apparatus according to an embodiment of this application;
FIG. 7 is another schematic structural diagram of a winding device according to an embodiment of this application;
FIG. 8 is a schematic diagram of a second electrode plate before and after cutting according to an embodiment of this application;
FIG. 9 is another schematic structural diagram of a winding device according to an embodiment of this application;
FIG. 10 is another schematic structural diagram of a winding device according to an embodiment of this application;
FIG. 11 is another schematic structural diagram of a winding device according to an embodiment of this application;
FIG. 12 is a schematic structural diagram of a winding apparatus according to an embodiment of this application;
FIG. 13 is a schematic structural diagram of a first combining apparatus according to an embodiment of this application;
FIG. 14 is another schematic structural diagram of a winding device according to an embodiment of this application;
FIG. 15 is a schematic flow block diagram of a winding method according to an embodiment of this application;
FIG. 16 is another schematic flow block diagram of a winding method according to an embodiment of this application; and
FIG. 17 is another schematic flow block diagram of a winding method according to an embodiment of this application.

The drawings are not drawn to scale.

### DETAILED DESCRIPTION OF EMBODIMENTS

The following gives a more detailed description of implementations of this application with reference to drawings and embodiments. The detailed description of the following embodiments and drawings are intended to describe the application illustratively.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In this application, a battery means a physical module that includes one or more battery cells to provide electrical energy. For example, the battery referred to herein may include a battery module, a battery pack, or the like. A battery typically includes a box configured to package one or more battery cells. The box prevents liquid or other foreign matters from affecting the charging or discharging of the battery cells.

Optionally, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. In some embodiments, a battery cell is briefly referred to as a cell.

A battery cell includes an electrode assembly and an electrolytic solution. The electrode assembly includes a positive electrode plate, a negative electrode plate, and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. Of the current collector, a part not coated with the positive active material layer protrudes from a part coated with the positive active material layer, and the part not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the current collector, a part not coated with the negative active material layer protrudes from a part coated with the negative active material layer, and the part not coated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as polypropylene (polypropylene, PP) or polyethylene (polyethylene, PE).

In some related technologies, an electrode assembly of a battery cell assumes a jelly-roll structure. Optionally, the jelly-roll electrode assembly may be in a cylindrical shape as a whole. The cylindrical electrode assembly fits in a cylindrical housing to form a cylindrical battery cell as a whole.

Specifically, the jelly-roll electrode assembly is formed by sequentially stacking a positive electrode plate, a negative electrode plate, and a separator in a flat spread-out state and then winding the stacked structure through a winding apparatus. In a conventional technical solution, the winding apparatus winds a stack of positive electrode plate, negative electrode plate, and separator to form an electrode assembly. After completing the formation of the battery assembly, the winding apparatus continues to wind another stack of positive electrode plate, negative electrode plate, and separators to form a next electrode assembly. Such a technical solution leads to relatively low production efficiency of the electrode assemblies, and hinders improvement of the production efficiency of battery cells and batteries.

In some improved technical solutions, the winding apparatus can wind two stacks of positive electrode plates, negative electrode plates, and separators simultaneously to form two electrode assemblies. Although this technical solution can improve the production efficiency of electrode assemblies, two apparatuses configured to place the positive electrode plates, negative electrode plates, and separators need to be disposed during the manufacture, thereby requiring a relatively large footprint in the shop floor.

In view of the situation above, this application provides a winding apparatus, in which an unwinding apparatus, a cutting apparatus, and a winding apparatus are contained. The unwinding apparatus is configured to supply an electrode plate. The cutting apparatus is configured to cut the electrode plate into a first part and a second part. The winding apparatus includes a first winding portion and a second winding portion capable of simultaneous winding movement. The first winding portion is configured to wind the first part of the first electrode plate to form a first electrode assembly, and the second winding portion is configured to wind the second part of the first electrode plate to form a second electrode assembly. Based on this technical solution, the electrode plate supplied by the unwinding apparatus can be cut into two parts by the cutting apparatus. The two parts can be wound by the two winding portions of the winding apparatus respectively to form two electrode assemblies. Therefore, only one unwinding apparatus is needed in the winding device. Two electrode assemblies can be obtained by simultaneous winding. The winding device is efficient in production, and requires just a relatively small footprint in the shop floor.

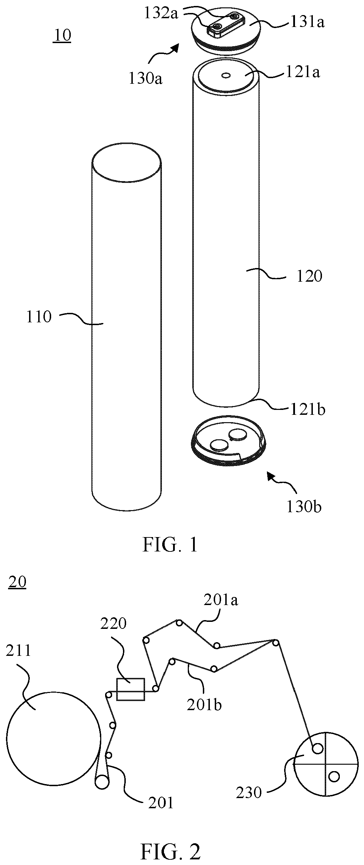

FIG. 1 is a schematic structural diagram of a battery cell 10 according to an embodiment of this application.

As shown in FIG. 1, the battery cell 10 may include a housing 110 and an electrode assembly 120. The electrode assembly 120 is accommodated in the housing 110. The shape of the housing 110 depends on the shape of the electrode assembly 120. As an example, as shown in FIG. 1, the electrode assembly 120 is cylindrical, and may be formed by stacking and winding a positive electrode plate, a separator, and a negative electrode plate (not shown in the drawing). The housing 110 is a hollow cylindrical housing that fits the electrode assembly 120. In addition, an opening is created on at least one surface of the housing 110. Through the opening, the electrode assembly 120 can be put into the housing 110 conveniently. For example, as shown in FIG. 1, in the hollow cylindrical housing 110, openings are created on the end faces at both ends of the housing 110.

The battery cell 10 may further include, in addition to the housing 110 and the electrode assembly 120, an end cap assembly to cover the opening of the housing 110. As shown in FIG. 1, the battery cell 10 includes a first end cap assembly 130a and a second end cap assembly 130b. The two end cap assemblies cover the two ends of the hollow cylindrical housing 110 respectively, and are connected to the housing 110, so as form a closed cavity that is configured to accommodate the electrode assembly 120. The closed cavity not only accommodates the electrode assembly 120, but is also filled with an electrolyte such as an electrolyte solution.

As an example, in the embodiment shown in FIG. 1, the first end cap assembly 130a includes a first end cap 131a and a first electrode terminal 132a. The first electrode terminal 132a may be mounted and fixed onto the first end cap 131a. Understandably, the second end cap assembly 130b may also include a second end cap and a second electrode terminal. The second electrode terminal in the second end cap assembly 130b and the first electrode terminal 132a in the first end cap assembly 130a are two electrode terminals of opposite polarities. For example, when the first electrode terminal 132a is a positive electrode terminal, the second electrode terminal is a negative electrode terminal.

The first end cap assembly 130a and the second end cap assembly 130b each may include a connecting component (not shown in FIG. 1) in addition to the end cap and the electrode terminal. The connecting component may also be referred to as a current collecting component, and is configured to electrically connect the electrode assembly 120 inside the battery cell 10 and the electrode terminal.

In the battery cell 10, the electrode assembly 120 may include a first tab 121a and a second tab 121b of opposite polarities. For example, when the first tab 121a is a positive tab, the second tab 121b is a negative tab. As an example, in the embodiment shown in FIG. 1, the first tab 121a and the second tab 121b are located on two end faces of the cylindrical electrode assembly 120 respectively. Specifically, after multiple layers of positive electrode plates, separators, and negative electrode plates are stacked and wound to form a cylindrical structure, the two end faces of the cylindrical electrode assembly may be processed through a relevant process to form the two tabs.

Specifically, in the embodiment shown in FIG. 1, the first tab 121a of the electrode assembly 120 may be connected to the first electrode terminal 132a in the first end cap assembly 130a by one current collecting component. Correspondingly, the second tab 121b of the electrode assembly 120 may be connected to the second electrode terminal in the second end cap assembly 130b by another current collecting component.

FIG. 2 is a schematic structural diagram of a winding device 20 according to an embodiment of this application which does not form part of the invention.

As shown in FIG. 2, the winding device 20 includes: a first unwinding apparatus 211, configured to output a first electrode plate 201; a first cutting apparatus 220, disposed downstream of the first unwinding apparatus 211, and configured to cut the first electrode plate 201 into a first part 201a and a second part 201b along a length direction of the first electrode plate 201; and a winding apparatus 230, disposed downstream of the first cutting apparatus 220, and including a first winding portion and a second winding portion capable of simultaneous winding movement. The first winding portion is configured to wind the first part 201a of the first electrode plate 201 to form a first electrode assembly. The second winding portion is configured to wind the second part 201b of the first electrode plate 201 to form a second electrode assembly.

Specifically, in this embodiment of this application, a rotatable shaft may be disposed in the first unwinding apparatus 211. The first electrode plate 201 is wound around the shaft layer by layer. When the shaft rotates under a driving force, the first electrode plate 201 around the shaft is output in a flat spread-out state, so that the first unwinding apparatus 211 completes a web release action.

Understandably, in order to receive and convey the first electrode plate 201 output by the first unwinding apparatus 211, a conveyor apparatus, such as a plurality of roller structures shown in FIG. 2 or a conveyor belt, may be disposed downstream of the first unwinding apparatus 211. The conveyor apparatus may run through a plurality of processing apparatuses in the winding device 20 to circulate the first electrode plate 201 in the winding device 20.

Specifically, after being output by the first unwinding apparatus 211, the first electrode plate 201 is in a strip shape in the winding device 20. For example, as shown in FIG. 1, the first electrode plate 201 is in the shape of a zigzag strip attached to a plurality of rollers. The length direction of the first electrode plate 201 is the length direction of the strip-shaped first electrode plate 201. When the strip-shaped first electrode plate 201 is transmitted in the winding device 20, the length direction of the first electrode plate 201 may be the transmission direction of the first electrode plate 201.

The first cutting apparatus 220 is disposed downstream of the first unwinding apparatus 211, and is configured to receive the first electrode plate 201 output from the first unwinding apparatus 211, and cut the first electrode plate 201 into a first part 201a and a second part 201b along the length direction of the electrode plate.

As an example but not limitation, the first cutting apparatus 220 may be a laser die-cutting apparatus. The laser die-cutting apparatus is fixed into the winding device 20. When the first electrode plate 201 is transmitted in the winding device 20 through the conveyor apparatus, the laser die-cutting apparatus can cut the first electrode plate 201 into the first part 201a and the second part 201b along the transmission direction of the first electrode plate 201.

The winding apparatus 230 is disposed downstream of the first cutting apparatus 220. After the first cutting apparatus 220 cuts the first electrode plate 201 into the first part 201a and the second part 201b, the first part 201a and the second part 201b can be transmitted by the conveyor apparatus simultaneously and reach the winding apparatus 230.

Specifically, the winding apparatus 230 includes a first winding portion and a second winding portion capable of simultaneous winding movement. The first winding portion and the second winding portion are configured to receive the first part 201a the second part 201b of the first electrode plate 201 respectively. The first winding portion and the second winding portion can simultaneously wind the first part 201a and the second part 201b of the first electrode plate 201 to form a first electrode assembly and a second electrode assembly respectively.

Understandably, in this embodiment of this application, the first part 201a and the second part 201b of the first electrode plate 201 each may be configured to form two electrode assemblies. The first part 201a and the second part 201b of the first electrode plate 201 may serve as positive electrode plates in the two electrode assemblies respectively, or, the first part 201a and the second part 201b of the first electrode plate 201 may serve as negative electrode plates in the two electrode assemblies respectively.

As an example but not limitation, the winding apparatus 230 may be a winding needle. The winding needle includes two winding portions in the length direction, so as to make it convenient to wind the first part 201a and the second part of the first electrode plate 201 respectively.

Based on the technical solution disclosed in this embodiment of this application, the winding device 20 includes a first cutting apparatus 220. The first cutting apparatus 220 can cut the first electrode plate 201 output by the first unwinding apparatus 211 into two parts. Subsequently, the two parts can be simultaneously wound by the two winding portions in the winding apparatus 230 respectively to form two electrode assemblies. Therefore, two electrode assemblies can be produced simultaneously by using only one first unwinding apparatus 211 in the winding device 20 in coordination with the first cutting apparatus 220 and the winding apparatus 230. The winding device 20 is efficient in manufacturing electrode assemblies, without requiring a large footprint in the shop floor, thereby improving the ratio of the footprint to the production capacity of the winding device 20, and increasing the maximum production capacity of the shop floor.

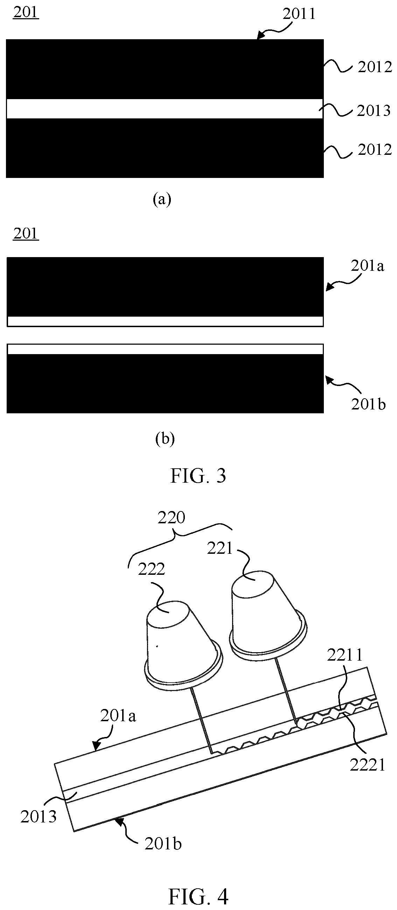

FIG. 3 is a schematic diagram of a first electrode plate 201 before and after cutting according to an embodiment of this application. Subfigure (a) of FIG. 3 is a schematic diagram of a first electrode plate 201 before cutting, and subfigure (b) of FIG. 3 is a schematic diagram of the first electrode plate 201 after cutting.

As shown in subfigure (a) of FIG. 3, the first electrode plate 201 includes a first substrate 2011 and two first active coating regions 2012 applied to surfaces of the first substrate 2011. The two first active coating regions 2012 are located on two sides of the first electrode plate 201 in a width direction respectively. A first tab region 2013 extending along a length direction of the first electrode plate 201 exists between the two first active coating regions 2012.

In this case, the first cutting apparatus 220 is configured to perform cutting in the first tab region 2013 along the length direction of the first electrode plate 201, so as to cut the first electrode plate 201 into the first part 201a and the second part 201b shown in subfigure (b) of FIG. 3.

Optionally, in some embodiments, the first active coating region 2012 applied on the first substrate 2011 may be a negative active material layer. As an example, the first substrate 2011 may be a copper substrate, and the first active coating region 2012 includes carbon or silicon.

Optionally, in some other embodiments, the first active coating region 2012 applied on the first substrate 2011 may be a positive active material layer. As an example, the first substrate 2011 may be an aluminum substrate, and the first active coating region 2012 includes lithium cobalt oxide, lithium iron phosphate, ternary lithium, lithium manganese oxide, or the like.

Specifically, in the first electrode plate 201 in an embodiment of this application, the first substrate 2011 is coated with two first active coating regions 2012. The two first active coating regions 2012 are isolated by a first tab region 2013 located between the two first active coating regions. The first tab region 2013 is a region that is not coated with the first active coating region 2012 on the first substrate 2011. The two first active coating regions 2012 and the first tab region 2013 are all strip-shaped regions, and extend along the length direction of the first electrode plate 201. Optionally, the lengths of the two first active coating regions 2012 and the first tab region 2013 may be close or identical to the length of the first electrode plate 201.

Optionally, as shown in subfigure (a) of FIG. 3, the two first active coating regions 2012 are of the same dimension in the width direction of the first electrode plate 201, and the coverage of the two first active coating regions 2012 extends to the edges of the first electrode plate 201 on both sides in the width direction. In addition, the first tab region 2013 may be located at the center of the first electrode plate 201 in the width direction. The width of the first tab region 2013 may be designed based on the actually required tab size of the electrode assembly, and is not particularly limited herein.

Optionally, in a case that the first tab region 2013 is located at the center of the first electrode plate 201 in the width direction, the first cutting apparatus 220 may further perform cutting along a centerline of the first tab region 2013 in the length direction, so as to form the first part 201a and the second part 201b of the same size. As shown in subfigure (b) of FIG. 3, the first part 201a and the second part 201b of the same size include the first active coating regions 2012 of the same size and the tabs of the same size. The first part 201a and the second part 201b of the same size can be configured to be wound to form electrode assemblies of the same size.

Alternatively, in other alternative embodiments, the first tab region 2013 may be deviated from the center of the first electrode plate 201 in the width direction. In this case, the first cutting apparatus 220 may cut the first electrode plate 201 into a first part 201a and a second part 201b of different sizes that are available for being wound to form electrode assemblies of different sizes.

Based on the technical solutions disclosed in these embodiments of this application, the first electrode plate 201 includes two first active coating regions 2012 and a first tab region 2013 located between the two first active coating regions 2012. The first electrode plate 201 is different from a conventional individual electrode plate configured to manufacture a single electrode assembly. The first electrode plate 201 includes two electrode plates (that is, the first part 201a and the second part 201b obtained by cutting) configured to manufacture two electrode assemblies. The first electrode plate 201 can be produced by the same coating process. In contrast to a technical solution in which two individual electrode plates are produced by two coating processes separately, the production efficiency of the first electrode plate 201 in the technical solutions hereof is higher.

In addition, the first tab region 2013 is located between the two first active coating regions 2012. The first cutting apparatus 220 performs cutting in the first tab region 2013, thereby dividing the electrode plate to obtain the first part 201a and the second part 201b, and at the same time, cutting the electrode plate to obtain a tab of the first part 201a and a tab of the second part 201b. In this way, the requirement for processing the tabs of the electrode assembly is fulfilled.

Optionally, in the above embodiment of this application, the first cutting apparatus 220 may include just one cutting portion. The cutting portion is configured to form, in the first tab region 2013, a cutting line along which the first electrode plate 201 is cut into two parts. Optionally, the one cutting line may be a straight line to form rectangular tabs in the first part 201a and the second part 201b shown in FIG. 3; or, the cutting line may be a wavy line, a polygonal line, or another line shape, to form tabs of other shapes. In this embodiment, the overall cost of the first cutting apparatus 220 is relatively low, and the cutting method is simple to implement, and the cutting efficiency and quality are relatively high.

Alternatively, in some other embodiments, the first cutting apparatus 200 may further include a plurality of cutting portions. The cutting portions are configured to form, in the first tab region 2013, a plurality of cutting lines along which the first electrode plate 201 is cut into a plurality of parts.

FIG. 4 is a schematic diagram of cutting a first electrode plate 201 by a first cutting apparatus 220 according to an embodiment of this application.

As shown in FIG. 4, the first cutting apparatus 220 includes: a first cutting portion 221 and a second cutting portion 222. The first cutting portion 221 is configured to perform cutting in the first tab region 2013, so as to form at least one tab of the first part 201a of the first electrode plate 201. The second cutting portion 222 is configured to perform cutting in the first tab region 2013, so as to form at least one tab of the second part 201b of the first electrode plate 201.

As an example, as shown in FIG. 4, the first cutting portion 221 and the second cutting portion 222 may be two lasers arranged in parallel. A laser beam emitted by the first cutting portion 221 forms a first cutting line 2211 in the first tab region 2013. A laser beam emitted by the second cutting portion 222 forms a second cutting line 2221 in the first tab region 2013. The first cutting line 2211 and the second cutting line 2221 do not intersect, but both extend along the length direction of the first tab region 2013 (that is, the length direction of the first electrode plate 201).

The first cutting line 2211 is configured to form the tab of the first part 201a of the first electrode plate 201. The second cutting line 2221 is configured to form the tab of the second part 201b of the first electrode plate 201. Optionally, the first cutting line 2211 and the second cutting line 2221 may be in any preset shape such as a polygonal line shape or a wavy line shape. Optionally, the shapes of the first cutting line 2211 and the second cutting line 2221 may be the same or different. The specific design of the first cutting line 2211 and the second cutting line 2221 is not particularly limited herein.

When the shapes of the first cutting line 2211 and the second cutting line 2221 are a wavy line or polygonal line, the tabs of the first part 201a and the second part 201b of the first electrode plate 201 may include a plurality of trapezoidal or semicircular small tabs corresponding to the first cutting line 2211 and the second cutting line 2221.

Based on the technical solution disclosed in this embodiment of this application, the first cutting portion 221 and the second cutting portion 222 are disposed in the first cutting apparatus 220. In this way, the two cutting portions can cut the first tab region 2013 in the first electrode plate 201 separately, so as to form the tab of the first part 201a and the tab of the second part 201b respectively. Based on this technical solution, the first cutting portion 221 and the second cutting portion 222 can produce, in response to specific needs, the tab of the first part 201a of the first electrode plate 201 and the tab of the second part 201b of the first electrode plate 201, which are of a smaller size and a higher precision, thereby not only facilitating the subsequent manufacturing process of the electrode assembly such as tab processing in the wound electrode assembly, but also improving the overall performance of the electrode assembly.

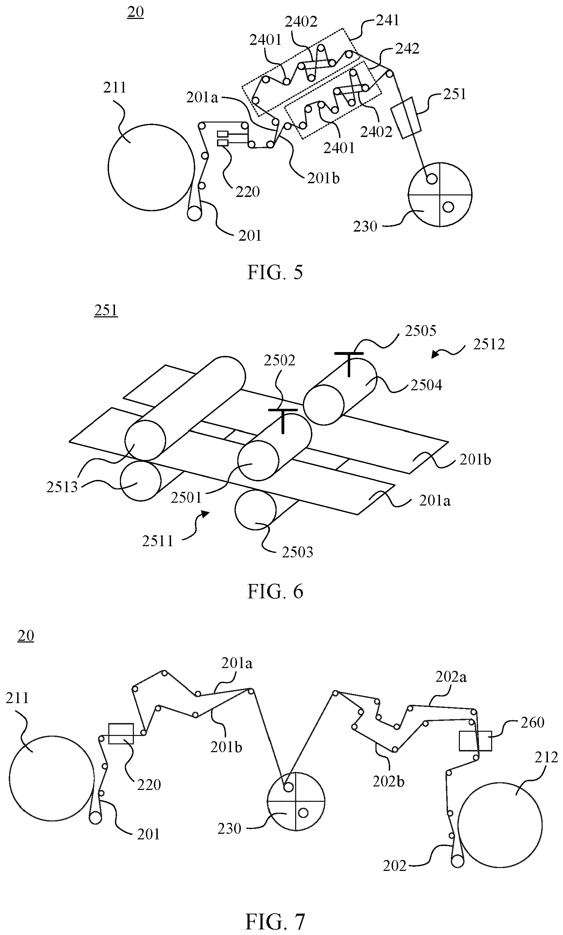

FIG. 5 is another schematic structural diagram of a winding device 20 according to an embodiment of this application which does not form part of the invention.

As shown in FIG. 5, in an embodiment of this application, the winding device 20 further includes: a first adjustment assembly 241 and/or a second adjustment assembly 242, disposed between the first cutting apparatus 220 and the winding apparatus 230. The first adjustment assembly 241 is configured to adjust transmission parameters of the first part 201a of the first electrode plate 201 in the winding device 20, and/or, the second adjustment assembly 242 is configured to adjust transmission parameters of the second part 201b of the first electrode plate 201 in the winding device 20.

Specifically, after the first cutting apparatus 220 cuts the first electrode plate 201 into the first part 201a and the second part 201b, the first part 201a and the second part 201b are transmitted downstream by two different conveyors respectively. To ensure the effect of winding the two parts by the downstream winding apparatus 230, a first adjustment assembly 241 is further disposed between the winding apparatus 230 and the first cutting apparatus 220 in the winding device 20 to adjust the first part 201a of the first electrode plate 201; and/or a second adjustment assembly 242 is further disposed between the winding apparatus and the first cutting apparatus to adjust the second part 201b of the first electrode plate 201.

Specifically, the first adjustment assembly 241 is configured to adjust transmission parameters of the first part 201a of the first electrode plate 201 in the winding device 20. The transmission parameters include, but are not limited to, tension, speed, direction, position, and the like of the first part 201a in the winding device 20. Similarly, the second adjustment assembly 242 is configured to adjust transmission parameters of the second part 201b of the first electrode plate 201 in the winding device 20. The transmission parameters include, but are not limited to, tension, speed, direction, position, and the like of the second part 201b in the winding device 20.

In the technical solution disclosed in this embodiment of this application, the transmission parameters of the first part 201a and/or the second part 201b of the first electrode plate 201 are adjusted by the first adjustment assembly 241 and/or the second adjustment assembly 242. In this way, the transmission of the first part 201a and/or the second part 201b in the winding device 20 is more stable. In addition, the subsequent winding effect of the first part 201a and/or the second part 201b in the winding apparatus 230 is improved, thereby improving the overall performance of the two produced electrode assemblies.

As an example but not limitation, as shown in FIG. 5, the winding device 20 may include both a first adjustment assembly 241 and a second adjustment assembly 242 concurrently. The first adjustment assembly 241 and the second adjustment assembly 242 each may include a realignment assembly 2401. The realignment assembly 2401 in the first adjustment assembly 241 is configured to adjust a relative position of the first part 201a of the first electrode plate 201 in the winding device 20. The realignment assembly 2401 in the second adjustment assembly 242 is configured to adjust a relative position of the second part 201b of the first electrode plate 201 in the winding device 20.

By disposing the realignment assembly 2401 in the first adjustment assembly 241 and the second adjustment assembly 242 separately, the two realignment assemblies 2401 can more pertinently adjust the relative positions of the first part 201a and the second part 201b of the first electrode plate 201 in the winding device 20 separately. The adjustment result is more accurate, thereby improving the winding effect of the first part 201a and the second part 201b of the first electrode plate 201 in the winding apparatus 230.

In addition, as shown in FIG. 5, the first adjustment assembly 241 and the second adjustment assembly 242 each may further include a tension adjustment assembly 2402. The tension adjustment assembly 2402 in the first adjustment assembly 241 is configured to detect and adjust tension of the first part 201a of the first electrode plate 201. The realignment assembly 2401 in the second adjustment assembly 242 is configured to detect and adjust tension of the second part 201b of the first electrode plate 201.

By disposing the tension adjustment assembly 2402 in the first adjustment assembly 241 and the second adjustment assembly 242 separately, the tension adjustment assembly 2402 can more pertinently detect and adjust the tension of the first part 201a and the second part 201b of the first electrode plate 201 separately. The adjustment result is more accurate, thereby improving the transmission stability and reliability of the first part 201a and the second part 201b of the first electrode plate 201 in the winding device 20, and further improving the winding effect of the first part 201a and the second part 201b in the winding apparatus 230.

Optionally, as shown in FIG. 5, the winding device 20 further includes: a first feeding apparatus 251, disposed upstream of the winding apparatus 230 and configured to convey the first part 201a and the second part 201b of the first electrode plate 201 to the winding apparatus 230.

FIG. 6 is a schematic structural diagram of a first feeding apparatus 251 according to an embodiment of this application.

As shown in FIG. 6, the first feeding apparatus 251 includes: a first feeding portion 2511 and a second feeding portion 2512, disposed upstream of the winding apparatus 230. The first feeding portion 2511 is configured to convey the first part 201a of the first electrode plate 201 to the first winding portion of the winding apparatus 230. The second feeding portion 2512 is configured to convey the second part 201b of the first electrode plate 201 to the second winding portion of the winding apparatus 230.

Specifically, in this embodiment of this application, the two parts of the first electrode plate 201 are processed by the two feeding portions respectively. In this way, the two parts of the first electrode plate 201 can enter the two winding portions in the winding apparatus respectively in a more stable and reliable manner, thereby improving the winding effect of the two parts of the first electrode plate 201, and in turn, improving the performance of the two produced electrode assemblies.

Optionally, as shown in FIG. 6, the first feeding portion 2511 may include: a first moving roller 2501, a first driving member 2502, and a first transmission member 2503. Similarly, the second feeding portion 2512 may include: a second moving roller 2505, a second driving member 2506, and a second transmission member (not shown in the drawing).

The first driving member 2502 is configured to drive the first moving roller 2501 to press and attach the first part 201a of the first electrode plate 201 to the first transmission member 2503. The first transmission member 2503 is configured to convey the first part 201a of the first electrode plate 201 to the first winding portion of the winding apparatus 230. Similarly, the second driving member 2506 is configured to drive the second moving roller 2505 to press and attach the second part 201b of the first electrode plate 201 to the second transmission member. The second transmission member is configured to convey the second part 201b of the first electrode plate 201 to the second winding portion of the winding apparatus 230.

Specifically, in the embodiment shown in FIG. 6, in the first feeding portion 2511, the first transmission member 2503 may also be a roller structure. Relative to the first moving roller 2501, the first transmission member 2503 is a fixed roller. However, the fixed roller can actively rotate to drive the first part 201a of the first electrode plate 201 located on the fixed roller.

In the first feeding portion 2511, the first transmission member 2503 and the first moving roller 2501 are located on two sides of the first part 201a of the first electrode plate 201 respectively. The first moving roller 2501 can move in a direction perpendicular to the first electrode plate 201 under the driving action of the first driving member 2502. When an electrode plate needs to be fed into the winding apparatus 230, the first moving roller 2501 moves toward the first part 201a of the first electrode plate 201, presses and attaches the first part 201a to the first transmission member 2503, thereby improving the transmission effect of the first transmission member 2503 for the first part 201a, and improving the transmission stability of the first part 201a.

Similarly, for the relevant technical solutions of the second moving roller 2505, the second driving member 2506, and the second transmission member in the second feeding portion 2512, reference may be made to the description about the first moving roller 2501, the first driving member 2502, and the first transmission member 2503 in the first feeding portion 2511 above, the details of which are omitted here.

Optionally, in some embodiments, the first transmission member 2503 in the first feeding portion 2511 and the second transmission member in the second feeding portion 2512 may be two separate components. Alternatively, in some other embodiments, the first transmission member 2503 and the second transmission member may be one-piece components. For example, in an embodiment, the first transmission member 2503 and the second transmission member are the same fixed roller. The fixed roller corresponds to both the first part 201a and the second part 201b of the first electrode plate 201 simultaneously, and transmit the first part 201a and the second part 201b.

In addition, as shown in FIG. 6, the first feeding apparatus 251 may further include a clamping portion 2513 in addition to the first feeding portion 2511 and the second feeding portion 2512. The clamping portion is configured to clamp the first part 201a and the second part 201b of the first electrode plate 201, and enable the two parts to enter the subsequent two feeding portions smoothly and stably.

As an example, in the embodiment shown in FIG. 6, the clamping portion 2513 may be two clamping rollers. The two clamping rollers are disposed on two sides of the first part 201a and the second part 201b of the first electrode plate 201 respectively, and can clamp the two parts firmly but without causing much resistance to the transmission of the two parts.

In the technical solution in this embodiment, the first feeding portion 2511 and the second feeding portion 2512 each include components such as a moving roller, a driving member, and a transmission member, and are easy to implement in overall structure and highly reliable, and can convey the two parts of the first electrode plate 201 into the winding apparatus 230 smoothly and efficiently.

Understandably, FIG. 6 is merely illustrative, and shows some components of the first feeding apparatus 251. The first feeding apparatus 251 may further include other functional components in the related art such as a cuter or another cutting component in addition to the components shown in FIG. 6.

FIG. 7 is another schematic structural diagram of a winding device 20 according to an embodiment of this application which does not form part of the invention.

As shown in FIG. 7, the winding device 20 may further include: a second unwinding apparatus 212, configured to output a second electrode plate 202; and a second cutting apparatus 260, disposed downstream of the second unwinding apparatus 212, and configured to cut the second electrode plate 202 into a first part 202a and a second part 202b along a length direction of the second electrode plate 202.

The winding apparatus 230 is disposed downstream of the second cutting apparatus 260. The first winding portion in the winding apparatus is configured to wind the first part 201a of the first electrode plate 201 and the first part 202a of the second electrode plate 202 to form the first electrode assembly. The second winding portion is configured to wind the second part 201b of the first electrode plate 201 and the second part 202b of the second electrode plate 202 to form the second electrode assembly.

Specifically, in this embodiment of this application, a rotatable shaft may be disposed in the second unwinding apparatus 212. The second electrode plate 202 is wound around the shaft layer by layer. When the shaft rotates under a driving force, the second electrode plate 202 around the shaft is output in a flat spread-out state, so that the second unwinding apparatus 212 completes a web release action.

Understandably, in order to receive and convey the second electrode plate 202 output by the second unwinding apparatus 212, a conveyor apparatus, such as one or more roller structures or a conveyor belt, may be disposed downstream of the second unwinding apparatus 212. The conveyor apparatus may run through a plurality of processing apparatuses in the winding device 20 to circulate the second electrode plate 202 in the winding device 20.

After being output by the second unwinding apparatus 212, the second electrode plate 202 is in a strip shape in the winding device 20. For example, as shown in FIG. 7, the second electrode plate 202 is in the shape of a zigzag strip attached to a plurality of rollers. The length direction of the second electrode plate 202 is the length direction of the strip-shaped second electrode plate 202. When the strip-shaped second electrode plate 202 is transmitted in the winding device 20, the length direction of the second electrode plate 202 may be the transmission direction of the second electrode plate 202.

The second cutting apparatus 260 is disposed downstream of the second unwinding apparatus 212, and is configured to receive the second electrode plate 202 output from the second unwinding apparatus 212, and cut the second electrode plate 202 into a first part 202a and a second part 202b along the length direction of the electrode plate.

As an example but not limitation, the second cutting apparatus 260 may be a blade. The blade is fixed into the winding device 20. When the second electrode plate 202 is transmitted in the winding device 20 through the conveyor apparatus, the blade can cut the second electrode plate 202 into the first part 202a and the second part 202b along the transmission direction of the second electrode plate 202.

The winding apparatus 230 is disposed downstream of the first cutting apparatus 220 and the second cutting apparatus 260. After the first cutting apparatus 220 cuts the first electrode plate 201 into the first part 201a and the second part 201b, and, after the second cutting apparatus 260 cuts the second electrode plate 202 into the first part 202a and the second part 202b, the two parts of the first electrode plate 201 and the two parts of the second electrode plate 202 can be transmitted by the conveyor apparatus simultaneously and reach the winding apparatus 230.

The first winding portion in the winding apparatus 230 is configured to receive the first part 201a of the first electrode plate 201 and the first part 202a of the second electrode plate 202, and stack and wind the two first parts to form the first electrode assembly. Similarly, the second winding portion in the winding apparatus 230 is configured to receive the second part 201b of the first electrode plate 201 and the second part 202b of the second electrode plate 202, and stack and wind the two second parts to form the second electrode assembly.

Understandably, in this embodiment of this application, if the first part 201a and the second part 201b of the first electrode plate 201 are positive electrode plates in the two electrode assemblies, then the first part 202a and the second part 202b of the second electrode plate 201 are negative electrode plates in the two electrode assemblies. Alternatively, if the first part 201a and the second part 201b of the first electrode plate 201 are negative electrode plates in the two electrode assemblies, then the first part 202a and the second part 202b of the second electrode plate 201 are positive electrode plates in the two electrode assemblies.

Based on the technical solution disclosed in this embodiment of this application, the winding device 20 includes a first cutting apparatus 220 and a second cutting apparatus 260 simultaneously. The first cutting apparatus 220 can cut the first electrode plate 201 output by the first unwinding apparatus 211 into two parts. The second cutting apparatus 260 can cut the second electrode plate 202 output by the second unwinding apparatus 212 into two parts. Subsequently, the two parts of the first electrode plate 201 and the two parts of the second electrode plate 202 can be simultaneously wound by the two winding portions in the winding apparatus 230 respectively to form two electrode assemblies. Therefore, two electrode assemblies can be produced simultaneously by using only one first unwinding apparatus 211 and one second unwinding apparatus 212 in the winding device 20 in coordination with the first cutting apparatus 220, the second cutting apparatus 260, and the winding apparatus 230. The winding device 20 is efficient in manufacturing electrode assemblies, and can further reduce the footprint required in the shop floor, thereby further improving the ratio of the footprint to the production capacity of the winding device 20, and increasing the maximum production capacity of the shop floor.

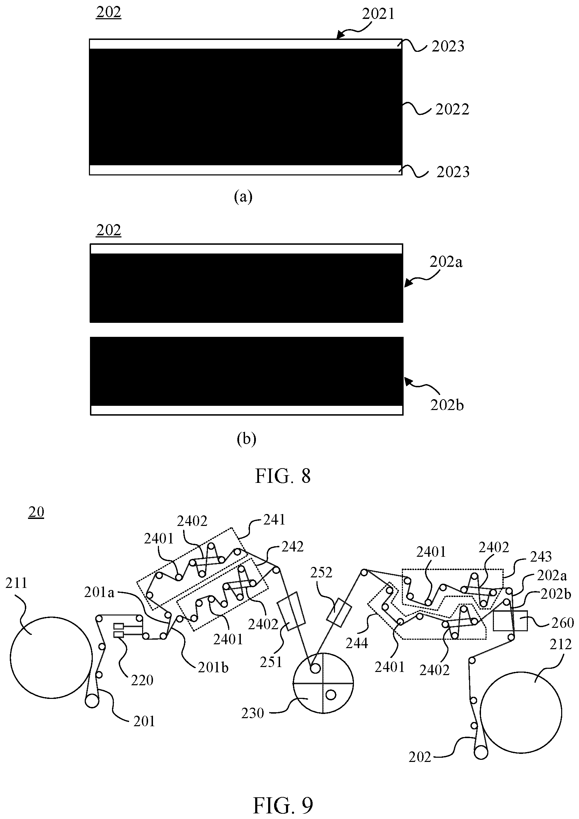

FIG. 8 is a schematic diagram of a second electrode plate 202 before and after cutting according to an embodiment of this application. Subfigure (a) of FIG. 8 is a schematic diagram of a second electrode plate 201 before cutting, and subfigure (b) of FIG. 8 is a schematic diagram of the second electrode plate 202 after cutting.

As shown in FIG. 8, the second electrode plate 202 includes a second substrate 2021 and a second active coating region 2022 applied to a surface of the second substrate 2021. A second tab region 2023 extending along a length direction of the second electrode plate 202 exists on each of two sides of the second active coating region 2022 in a width direction of the second electrode plate 202.

In this case, the second cutting apparatus 260 is configured to perform cutting in the second active coating region 2022 along the length direction of the second electrode plate 202, so as to cut the second electrode plate 202 into the first part 202a and the second part 202b.

Optionally, in some embodiments, the second active coating region 2022 applied on the second substrate 2021 may be a positive active material layer. As an example, the second substrate 2021 may be an aluminum substrate, and the second active coating region 2022 includes lithium cobalt oxide, lithium iron phosphate, ternary lithium, lithium manganese oxide, or the like.

Optionally, in some other embodiments, the second active coating region 2022 applied on the second substrate 2021 may be a negative active material layer. As an example, the second substrate 2021 may be a copper substrate, and the second active coating region 2022 includes carbon or silicon.

Specifically, in the second electrode plate 202 in an embodiment of this application, the second substrate 2021 is coated with one second active coating region 2022. The second active coating region 2022 includes two second tab regions 2023 on two sides in the width direction. The second tab regions 2023 are regions that are not coated with the second active coating region 2022 on the second substrate 2021. The second active coating region 2022 and the two second tab regions 2023 are all strip-shaped regions, and extend along the length direction of the second electrode plate 202. Optionally, the lengths of the second active coating region 2022 and the two second tab regions 2023 may be close or identical to the length of the first electrode plate 201.

Optionally, as shown in subfigure (a) of FIG. 8, the two second tab regions 2023 are of the same dimension in the width direction of the second electrode plate 202, and the coverage of the two second tab regions 2023 extends to the edges of the second electrode plate 202 on both sides in the width direction. The width of the second tab regions 2023 may be designed based on the actually required tab size of the electrode assembly, and is not particularly limited herein.

Optionally, in this embodiment of this application, the second cutting apparatus 260 may perform cutting along a centerline of the second active coating region 2022 in the length direction, so as to form the first part 202a and the second part 202b of the same size. As shown in subfigure (b) of FIG. 8, the first part 202a and the second part 202b of the same size include the second active coating regions 2022 of the same size and the tabs of the same size. The first part 202a and the second part 202b of the same size can be configured to be wound to form electrode assemblies of the same size.

Alternatively, in other alternative embodiments, the second cutting apparatus 260 may cut the second electrode plate 202 into a first part 202a and a second part 202b of different sizes that are available for being wound to form electrode assemblies of different sizes.

Based on the technical solution disclosed in this embodiment of this application, the second electrode plate 202 includes the second active coating region 2022 and two second tab regions 2023 located on two sides of the second active coating region 2022 respectively. The second electrode plate 202 is different from a conventional individual electrode plate configured to manufacture a single electrode assembly. The second electrode plate 202 includes two electrode plates (that is, the first part 202a and the second part 202b obtained by cutting) configured to manufacture two electrode assemblies. The second electrode plate 202 can be produced by the same coating process. In contrast to a technical solution in which two individual electrode plates are produced by two coating processes separately, the production efficiency of the second electrode plate 202 in the technical solutions hereof is higher.

FIG. 9 is another schematic structural diagram of a winding device 20 according to an embodiment of this application which does not form part of the invention.

As shown in FIG. 9, the winding device 20 further includes: a third adjustment assembly 243 and/or a fourth adjustment assembly 244, disposed between the second cutting apparatus 260 and the winding apparatus 230. The third adjustment assembly 243 is configured to adjust transmission parameters of the first part 202a of the second electrode plate 202 in the winding device 20, and/or, the fourth adjustment assembly 244 is configured to adjust transmission parameters of the second part 202b of the second electrode plate 202 in the winding device 20.

Optionally, in some embodiments, the third adjustment assembly 243 and the fourth adjustment assembly 244 include: a realignment assembly 2401, where the realignment assembly 2401 in the third adjustment assembly 243 is configured to adjust a relative position of the first part 202a of the second electrode plate 202 in the winding device 20, and the realignment assembly 2401 in the fourth adjustment assembly 244 is configured to adjust a relative position of the second part 202b of the second electrode plate 202 in the winding device 20; and/or the third adjustment assembly 243 and the fourth adjustment assembly 244 include: a tension adjustment assembly 2402, where the tension adjustment assembly 2402 in the third adjustment assembly 243 is configured to detect and adjust tension of the first part 202a of the second electrode plate 202, and the tension adjustment assembly 2402 in the fourth adjustment assembly 244 is configured to detect and adjust tension of the second part 202b of the second electrode plate 202.

Specifically, in this embodiment, for the relevant technical solutions of the third adjustment assembly 243 and the fourth adjustment assembly 244, reference may be made to the description about the first adjustment assembly 241 and the second adjustment assembly 242 in the embodiment described above, the details of which are omitted here.

In the technical solution disclosed in this embodiment of this application, the transmission parameters of the first part 202a and/or the second part 202b of the second electrode plate 202 are adjusted by the third adjustment assembly 243 and/or the fourth adjustment assembly 244 respectively. In this way, the transmission of the first part 202a and/or the second part 202b in the winding device 20 is more stable. In addition, the subsequent winding effect of the first part 202a and/or the second part 202b in the winding apparatus 230 is improved, thereby improving the overall performance of the two produced electrode assemblies.

Optionally, as shown in FIG. 9, the winding device 20 may further include: a second feeding apparatus 252, disposed upstream of the winding apparatus 230 and configured to convey the first part 202a and the second part 202b of the second electrode plate 202 to the winding apparatus 230.

Specifically, for the relevant technical solution of the second feeding apparatus 252, reference may be made to the description about the first feeding apparatus 251 in the embodiment described above, the details of which are omitted here.

In the embodiments shown in FIG. 7 to FIG. 9, the winding device 20 includes only one second unwinding apparatus 212, and the second electrode plate 202 output by the second unwinding apparatus 212 is cut into two parts by the second cutting apparatus 260. In some other embodiments, the winding device 20 may include two second unwinding apparatuses 212. The second electrode plates 202 output by the two second unwinding apparatuses 212 do not need to be cut.

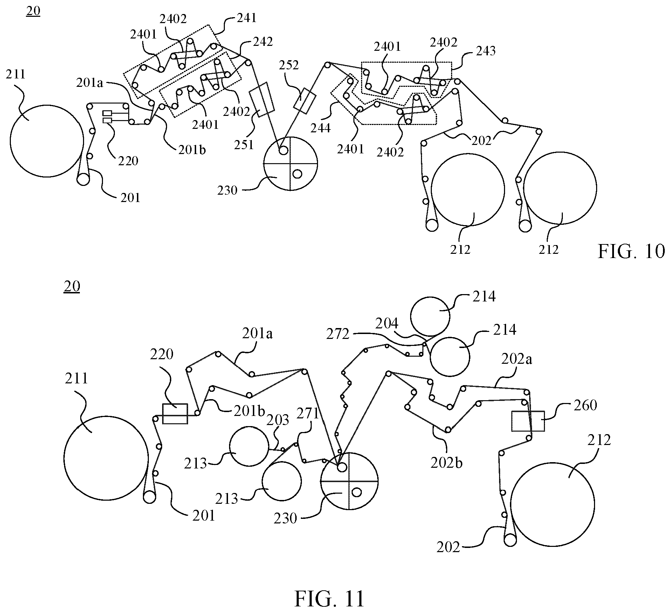

FIG. 10 is another schematic structural diagram of a winding device 20 according to an embodiment of this application which does not form part of the invention.

As shown in FIG. 10, the winding device 20 includes: two second unwinding apparatuses 212. Each second unwinding apparatus 212 in the two second unwinding apparatuses 212 is configured to output a second electrode plate 202.

The winding apparatus 230 is disposed downstream of the two second unwinding apparatuses 212. The first winding portion in the winding apparatus is configured to wind the first part 201a of the first electrode plate 201 and the second electrode plate 202 from one of the second unwinding apparatuses 212 to form the first electrode assembly. The second winding portion is configured to wind the second part 201b of the first electrode plate 201 and the second electrode plate 202 from the other second unwinding apparatus 212 to form the second electrode assembly.

Specifically, in this embodiment of this application, the two second electrode plates 202 disposed on the two second unwinding apparatuses 212 may be the first part 202a and the second part 202b in the embodiment shown in FIG. 8, respectively. In other words, in this embodiment of this application, the second electrode plate 202 is the electrode plate configured to form a single electrode assembly.

Specifically, referring to the first part 202a or the second part 202b in FIG. 8, the second electrode plate 202 includes a second substrate 2021 and a second active coating region 2022 applied to a surface of the second substrate 2021. A second tab region 2023 extending along a length direction of the second electrode plate 202 exists on one side of the second active coating region 2022 in a width direction of the second electrode plate 202.

Based on the technical solution disclosed in this embodiment of this application, the winding device 20 includes two second unwinding apparatuses 212. The second electrode plate 202 disposed on the two second unwinding apparatuses 212 is an electrode plate in a single electrode assembly, and does not need to be cut. In these embodiments, the positions of the two second electrode plates 202 output by the two second unwinding apparatuses 212 do not need to be much adjusted subsequently, and the two second electrode plates 202 can coordinate with the two parts of the first electrode plate 201 to undergo a winding process and form two electrode assemblies. Therefore, based on such technical solutions, the transmission of the second electrode plate 202 in the winding device 20 is more stable, and the performance and yield rate of the electrode assemblies produced by the winding device 20 are improved.

Optionally, in the embodiment shown in FIG. 10, an adjustment assembly is disposed downstream of the second unwinding apparatus 212. For example, the third adjustment assembly 243 and the fourth adjustment assembly 244 are disposed downstream of the two second unwinding apparatuses 212 respectively. The third adjustment assembly 243 and the fourth adjustment assembly 244 are configured to adjust transmission parameters of the two second electrode plates 202 from the two second unwinding apparatuses 212 in the winding device 20.

FIG. 11 is a schematic structural diagram of another winding device 20 according to an embodiment of this application.

As shown in FIG. 11, on the basis of the embodiment shown in FIG. 7, the winding device 20 further includes: two third unwinding apparatuses 213, where each third unwinding apparatus 213 in the two third unwinding apparatuses 213 is configured to output a first separator 203; and two fourth unwinding apparatuses 214, where each fourth unwinding apparatus 214 in the two fourth unwinding apparatuses 214 is configured to output a second separator 204.

The winding apparatus 230 is disposed downstream of the two third unwinding apparatuses 213 and the two fourth unwinding apparatuses 214. The first winding portion in the winding apparatus is configured to wind the first part 201a of the first electrode plate 201, the first separator 203 from one third unwinding apparatus 213, and the second separator 204 from one fourth unwinding apparatus 214 to form the first electrode assembly. The second winding portion is configured to wind the second part 201b of the first electrode plate 201, the first separator 203 from the other third unwinding apparatus 213, and the second separator 204 from the other fourth unwinding apparatus 214 to form the second electrode assembly.

Specifically, in this embodiment of this application, the first separator 203 and the second separator 204 are configured to isolate the positive electrode plate from the negative electrode plate, and are wound together with the positive and negative electrode plates to form an electrode assembly. In other words, in this embodiment of this application, each winding portion in the winding apparatus 230 may receive four incoming materials, that is, the first separator 203, the second separator 204, a part of the first electrode plate 201, and a part of the second electrode plate 202.

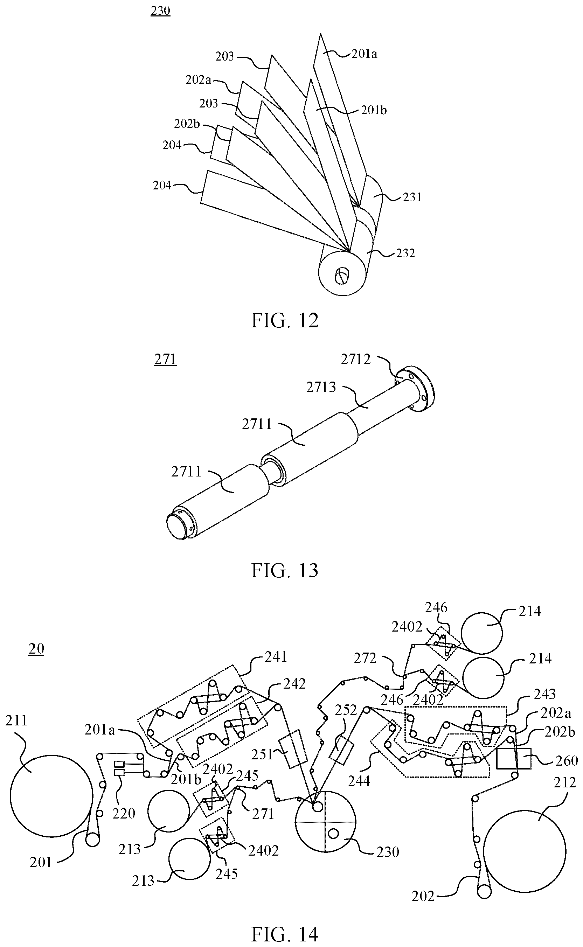

FIG. 12 is a schematic structural diagram of a winding apparatus 230 according to an embodiment of this application.

As shown in FIG. 12, the first winding portion 231 and the second winding portion 232 in the winding apparatus 230 are arranged along an axial direction of the winding apparatus 230. The first winding portion 231 in the winding apparatus 230 is configured to receive one first separator 203, the first part 201a of the first electrode plate 201, one second separator 204, and the first part 202a of the second electrode plate 202 simultaneously, and wind the four incoming materials. Meanwhile, the second winding portion 232 arranged in parallel with the first winding portion 231 is configured to receive the other first separator 203, the second part 201b of the first electrode plate 201, the other second separator 204, and the second part 202b of the second electrode plate 202 simultaneously, and wind the four incoming materials.

In the technical solution disclosed in this embodiment of this application, two first separators 203 are output by two third unwinding apparatuses 213. Two second separators 204 are output by two fourth unwinding apparatuses 214. The two first separators 203 and the two second separators 204 can be conveyed to the two winding portions in the winding apparatus 230 simultaneously, so as to be wound synchronously with the two parts of the first electrode plate to form two electrode assemblies of stable performance that can operate reliably. The manufacturing efficiency of the electrode assemblies is relatively high.

Optionally, as shown in FIG. 11, in an embodiment of this application, the winding device 20 further includes: a first combining apparatus 271, disposed between the two third unwinding apparatuses 213 and the winding apparatus 230, where the first combining apparatus 271 includes two first rotating portions (not shown in the drawing) disposed on the same roller, the two first rotating portions correspond one-to-one to the two third unwinding apparatuses 213 and the two winding portions in the winding apparatus 230, and each of the first rotating portions is configured to convey the first separator 203 from a corresponding third unwinding apparatus 213 to a corresponding winding portion; and/or
a second combining apparatus 272, disposed between the two fourth unwinding apparatuses 214 and the winding apparatus 230, where the second combining apparatus 272 includes two second rotating portions (not shown in the drawing) disposed on the same roller, the two second rotating portions correspond one-to-one to the two fourth unwinding apparatuses 214 and the two winding portions in the winding apparatus 230, and each of the second rotating portions is configured to convey the second separator 204 from a corresponding fourth unwinding apparatus 214 to a corresponding winding portion.

FIG. 13 is a schematic structural diagram of a first combining apparatus 271 according to an embodiment of this application.

As shown in FIG. 13, the first combining apparatus 271 includes: a fixed portion 2712, an idler roller 2713, and two mutually separated first rotating portions 2711 disposed on the idler roller 2713. One end of the idler roller 2713 in the axial direction is fixed to the fixed portion 2712. The two first rotating portions 2711 are two separate bearing positions on the idler roller 2713, and are configured to receive the two separated first separators 203 respectively.

Specifically, the two first rotating portions 2711 correspond one-to-one to the two third unwinding apparatuses 213. The two first rotating portions 2711 correspond one-to-one to the two winding portions, that is, the first winding portion 231 and the second winding portion 232, in the winding apparatus 230. One first rotating portion 2711, a corresponding third unwinding apparatus 213, and a corresponding winding portion form a winding assembly. The winding assembly is configured to wind one first separator 203 onto one winding portion.

Understandably, the specific structure of the second combining apparatus 272 may be the same as the first combining apparatus 271. For detailed technical solutions, reference may be made to the relevant description written above, the details of which are omitted here.

Based on the technical solution disclosed in this embodiment of this application, the two first separators 203 can be conveyed to the two winding portions in the winding apparatus 230 by the same first combining apparatus 271. Similarly, the two second separators 204 can also be conveyed to the two winding portions in the winding apparatus 230 by the same second combining apparatus 272. In these embodiments, it is not necessary to convey the two first separators 203 to the winding apparatus 230 separately by using a plurality of apparatuses, and it is not necessary to convey the two second separators 204 to the winding apparatus 230 separately by using a plurality of apparatuses, thereby reducing the number of apparatuses in the winding device 20, and further reducing the footprint of the winding device 20 in the shop floor.

FIG. 14 is another schematic structural diagram of a winding device 20 according to an embodiment of this application.

As shown in FIG. 14, on the basis of the embodiment shown in FIG. 11, the winding device 20 further includes:
two fifth adjustment assemblies 245, corresponding one-to-one to the two third unwinding apparatuses 213, and disposed between the first combining apparatus 271 and the two third unwinding apparatuses 213, where each of the fifth adjustment assemblies 245 is configured to adjust transmission parameters of the first separator 203 in the winding device 20; and/or
two sixth adjustment assemblies 246, corresponding one-to-one to the two fourth unwinding apparatuses 214, and disposed between the second combining apparatus 272 and the two fourth unwinding apparatuses 214, where each of the sixth adjustment assemblies 246 is configured to adjust transmission parameters of the second separator 204 in the winding device 20.

Optionally, in some embodiments, the fifth adjustment assembly 245 and the sixth adjustment assembly 246 include: a tension adjustment assembly 2402, where the tension adjustment assembly 2402 in the fifth adjustment assembly 245 is configured to detect and adjust tension of the first separator 203, and the tension adjustment assembly 2402 in the sixth adjustment assembly 246 is configured to detect and adjust tension of the second separator 204.

Specifically, in these embodiments, for the relevant technical solutions of the fifth adjustment assembly 245 and the sixth adjustment assembly 246, reference may be made to the description about the first adjustment assembly 241 and the second adjustment assembly 242 in the embodiment described above, the details of which are omitted here.

In the technical solutions in these embodiments of this application, the transmission parameters of the first separator 203 and/or the second separator 204 are adjusted by the fifth adjustment assembly 245 and/or the sixth adjustment assembly 246. In this way, the transmission of the first separator 203 and/or the second separator 204 in the winding device 20 is more stable. In addition, the subsequent winding effect of the first separator 203 and/or the second separator 204 in the winding apparatus 230 is improved, thereby improving the overall performance of the two produced electrode assemblies.

Understandably, in the above embodiments shown in FIG. 11 to FIG. 14, the winding device 20 includes: one second unwinding apparatus 212 and a second cutting apparatus 260 as shown in FIG. 7 or FIG. 9. In an alternative embodiment, the winding device 20 may include two second unwinding apparatuses 212 as shown in FIG. 10. In this embodiment, for the relevant technical solutions of other components in the winding device 20, reference may be made to the description written above, the details of which are omitted here.

It is also understandable that, the above application embodiments are described by using an example in which the first cutting apparatus 220 cuts the first electrode plate 201 into two parts. In another embodiment, the first cutting apparatus 220 may cut the first electrode plate 201 into three or more parts. The winding apparatus 230 can wind three or more parts of the first electrode plates simultaneously to manufacture three or more electrode assemblies at the same time. Specifically, the specific technical solution of this embodiment may be learned with reference to the technical solutions of the preceding application embodiments, the details of which are omitted here.

The winding device 20 according to some embodiments of this application have been described above. The following describes a winding method 30 according to an embodiment of this application. For the details omitted in this embodiment, reference may be made to the preceding embodiments.

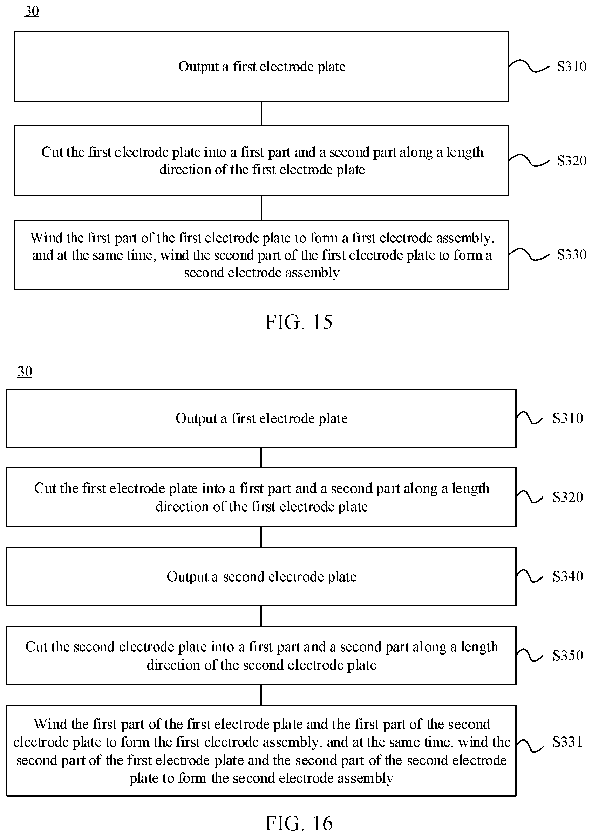

FIG. 15 is a schematic flow block diagram of a winding method 30 according to an embodiment of this application which does not form part of the invention.

As shown in FIG. 15, the winding method 30 includes the following steps:
S310: Outputting a first electrode plate 201.
S320: Cutting the first electrode plate 201 into a first part 201a and a second part 201b along a length direction of the first electrode plate 201.
S330: Winding the first part 201a of the first electrode plate 201 to form a first electrode assembly, and at the same time, winding the second part 201b of the first electrode plate 201 to form a second electrode assembly.

In some possible embodiments, the first electrode plate 201 includes a first substrate 2011 and two first active coating regions 2012 applied to surfaces of the first substrate 2011. The two first active coating regions 2012 are located on two sides of the first electrode plate 201 in a width direction respectively. A first tab region 2013 extending along a length direction of the first electrode plate 201 exists between the two first active coating regions 2012.

In this case, step S320 may include: performing cutting in the first tab region 2013 along the length direction of the first electrode plate 201, so as to cut the first electrode plate 201 into the first part 201a and the second part 201b.

In some possible embodiments, the "performing cutting in the first tab region 2013 along the length direction of the first electrode plate 201, so as to cut the first electrode plate 201 into the first part 201a and the second part 201b" may include: performing cutting in the first tab region 2013 along a first cutting line 2211 that extends in the length direction of the first electrode plate 201, so as to obtain the first part 201a of the first electrode plate 201 and form at least one tab of the first part 201a of the first electrode plate 201; and performing cutting in the first tab region 2013 along a second cutting line 2221 that extends in the length direction of the first electrode plate 201, so as to obtain the second part 201b of the first electrode plate 201 and form at least one tab of the second part 201b of the first electrode plate 201.

FIG. 16 is another schematic flow block diagram of a winding method 30 according to an embodiment of this application which does not form part of the invention.

As shown in FIG. 16, optionally, the winding method 30 may further include the following steps in addition to the above steps S310 and S320:
S340: Outputting a second electrode plate 202; and
S350: Cutting the second electrode plate 202 into a first part 202a and a second part 202b along a length direction of the second electrode plate 202.

Optionally, step S330 may include the following step S331:
S331: Winding the first part 201a of the first electrode plate 201 and the first part 202a of the second electrode plate 202 to form the first electrode assembly, and at the same time, winding the second part 201b of the first electrode plate 201 and the second part 202b of the second electrode plate 202 to form the second electrode assembly.

In some possible embodiments, the second electrode plate 202 includes a second substrate 2021 and a second active coating region 2022 applied to a surface of the second substrate 2021. A second tab region 2023 extending along a length direction of the second electrode plate 202 exists on each of two sides of the second active coating region 2022 in a width direction of the second electrode plate 202.

In this case, step S350 may include: performing cutting in the second active coating region 2022 along the length direction of the second electrode plate 202, so as to cut the second electrode plate 202 into the first part 202a and the second part 202b.

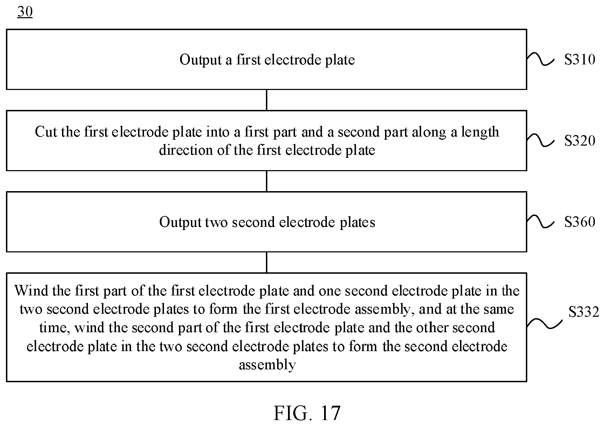

FIG. 17 is another schematic flow block diagram of a winding method 30 according to an embodiment of this application which does not form part of the invention.

As shown in FIG. 17, optionally, the winding method 30 may further include the following steps in addition to the above steps S310 and S320:
S360: Outputting two second electrode plates 202.

Optionally, step S330 may include the following step S332.

S332: Winding the first part 201a of the first electrode plate 201 and one second electrode plate 202 in the two second electrode plates 202 to form the first electrode assembly, and at the same time, winding the second part 201b of the first electrode plate 201 and the other second electrode plate 202 in the two second electrode plates 202 to form the second electrode assembly.

In some possible embodiments, the second electrode plate 202 includes a second substrate 2021 and a second active coating region 2022 applied to a surface of the second substrate 2021. A second tab region 2023 extending along a length direction of the second electrode plate 202 exists on one side of the second active coating region 2022 in a width direction of the second electrode plate 202.

## Claims

1. A winding device (20), comprising:
a first unwinding apparatus (211), configured to output a first electrode plate (201);
a first cutting apparatus (220), disposed downstream of the first unwinding apparatus (211), and configured to cut the first electrode plate (201) into a first part (201a) and a second part (201b) along a length direction of the first electrode plate (201);
a winding apparatus (230) comprising a first winding portion (231) and a second winding portion (232) capable of simultaneous winding movement,
**characterised by** further comprising:
a second unwinding apparatus (212), configured to output a second electrode plate (202);
a second cutting apparatus (260), disposed downstream of the second unwinding apparatus (212), and configured to cut the second electrode plate (202) into a first part (202a) and a second part (202b) along a length direction of the second electrode plate (202);
two third unwinding apparatuses (213), wherein each third unwinding apparatus (213) in the two third unwinding apparatuses (213) is configured to output a first separator (203);
two fourth unwinding apparatuses (214), wherein each fourth unwinding apparatus (214) in the two fourth unwinding apparatuses (214) is configured to output a second separator (204);
wherein the winding apparatus (230) is disposed downstream of the first cutting apparatus (220), the second cutting apparatus (260), the two third unwinding apparatuses (213) and the two fourth unwinding apparatuses (214),
wherein the first winding portion is configured to wind the first part (201a) of the first electrode plate (201), the first separator (203) from one of the third unwinding apparatuses (213), the second separator (204) from one of the fourth unwinding apparatuses (214), and the first part (202a) of the second electrode plate (202) to form a first electrode assembly, and
wherein the second winding portion is configured to wind the second part (201b) of the first electrode plate (201), the first separator (203) from the other of the third unwinding apparatuses (213), the second separator (204) from the other of the fourth unwinding apparatuses (214), and the second part (202b) of the second electrode plate (202) to form a second electrode assembly.

2. The winding device (20) according to claim 1, wherein the first electrode plate (201) comprises a first substrate (2011) and two first active coating regions (2012) applied to a surface of the first substrate (2011), wherein the two first active coating regions (2012) are located on two sides of the first electrode plate (201) in a width direction respectively, and a first tab region (2013) extending along the length direction of the first electrode plate (201) is provided between the two first active coating regions (2012); and
the first cutting apparatus (220) is configured to perform cutting in the first tab region (2013) along the length direction of the first electrode plate (201), so as to cut the first electrode plate (201) into the first part (201a) and the second part (201b),
wherein preferably:
the first cutting apparatus (220) comprises: a first cutting portion (221) and a second cutting portion (222),
wherein the first cutting portion (221) is configured to perform cutting in the first tab region (2013), so as to form at least one tab of the first part (201a) of the first electrode plate (201), and the second cutting portion (222) is configured to perform cutting in the first tab region (2013), so as to form at least one tab of the second part (201b) of the first electrode plate (201).

3. The winding device (20) according to claim 1 or 2, wherein the winding device (20) further comprises: a first adjustment assembly (241) and/or a second adjustment assembly (242), disposed between the first cutting apparatus (220) and the winding apparatus (230), wherein
the first adjustment assembly (241) is configured to adjust transmission parameters of the first part (201a) of the first electrode plate (201) in the winding device (20), and/or, the second adjustment assembly (242) is configured to adjust transmission parameters of the second part (201b) of the first electrode plate (201) in the winding device (20),
wherein preferably:
the first adjustment assembly (241) and the second adjustment assembly (242) each comprise a realignment assembly (2401), wherein the realignment assembly (2401) in the first adjustment assembly (241) is configured to adjust a relative position of the first part (201a) of the first electrode plate (201) in the winding device (20), and the realignment assembly (2401) in the second adjustment assembly (242) is configured to adjust a relative position of the second part (201b) of the first electrode plate (201) in the winding device (20); and/or
the first adjustment assembly (241) and the second adjustment assembly (242) each comprise a tension adjustment assembly (2402), wherein the tension adjustment assembly (2402) in the first adjustment assembly (241) is configured to detect and adjust tension of the first part (201a) of the first electrode plate (201), and the tension adjustment assembly (2402) in the second adjustment assembly (242) is configured to detect and adjust tension of the second part (201b) of the first electrode plate (201).

4. The winding device (20) according to any one of claims 1 to 3, wherein the winding device (20) further comprises: a first feeding portion (251) and a second feeding portion (252), disposed upstream of the winding apparatus (230),
wherein the first feeding portion (251) is configured to convey the first part (201a) of the first electrode plate (201) to the first winding portion of the winding apparatus (230), and the second feeding portion (252) is configured to convey the second part (201b) of the first electrode plate (201) to the second winding portion of the winding apparatus (230),
wherein preferably:
the first feeding portion (251) comprises: a first moving roller (2501), a first driving member (2502), and a first transmission member (2503); and the second feeding portion (252) comprises: a second moving roller (2504), a second driving member (2505), and a second transmission member (2506), wherein:
the first driving member (2502) is configured to drive the first moving roller (2501) to press and attach the first part (201a) of the first electrode plate (201) to the first transmission member (2503), and the first transmission member (2503) is configured to convey the first part (201a) of the first electrode plate (201) to the first winding portion;
the second driving member (2505) is configured to drive the second moving roller (2504) to press and attach the second part (201b) of the first electrode plate (201) to the second transmission member (2506), and the second transmission member (2506) is configured to convey the second part (201b) of the first electrode plate (201) to the second winding portion.

5. The winding device (20) according to any one of claims 1 to 4, wherein the second electrode plate (202) comprises a second substrate (2021) and a second active coating region (2022) applied to a surface of the second substrate (2021), wherein a second tab region (2023) extending along a length direction of the second electrode plate (202) is provided on each of two sides of the second active coating region (2022) in a width direction of the second electrode plate (202); and
wherein the second cutting apparatus (260) is configured to perform cutting in the second active coating region (2022) along the length direction of the second electrode plate (202), so as to cut the second electrode plate (202) into the first part (202a) and the second part (202b).

6. The winding device (20) according to claim 5, wherein the winding device (20) further comprises: a third adjustment assembly (243) and/or a fourth adjustment assembly (244), disposed between the second cutting apparatus (260) and the winding apparatus (230),
wherein the third adjustment assembly (243) is configured to adjust transmission parameters of the first part (202a) of the second electrode plate (202) in the winding device (20), and/or, the fourth adjustment assembly (244) is configured to adjust transmission parameters of the second part (202b) of the second electrode plate (202) in the winding device (20),
wherein preferably:
the third adjustment assembly (243) and the fourth adjustment assembly (244) each comprise a realignment assembly (2401), wherein the realignment assembly (2401) in the third adjustment assembly (243) is configured to adjust a relative position of the first part (202a) of the second electrode plate (202) in the winding device (20), and the realignment assembly (2401) in the fourth adjustment assembly (244) is configured to adjust a relative position of the second part (202b) of the second electrode plate (202) in the winding device (20); and/or
the third adjustment assembly (243) and the fourth adjustment assembly (244) each comprise a tension adjustment assembly (2402), wherein the tension adjustment assembly (2402) in the third adjustment assembly (243) is configured to detect and adjust tension of the first part (202a) of the second electrode plate (202), and the tension adjustment assembly (2402) in the fourth adjustment assembly (244) is configured to detect and adjust tension of the second part (202b) of the second electrode plate (202).

7. The winding device (20) according to any one of claims 1 to 4, wherein the winding device (20) further comprises:
two second unwinding apparatuses (212), wherein each second unwinding apparatus (212) in the two second unwinding apparatuses (212) is configured to output a second electrode plate (202),
wherein the winding apparatus (230) is disposed downstream of the two second unwinding apparatuses (212), wherein the first winding portion is configured to wind the first part (201a) of the first electrode plate (201) and the second electrode plate (202) from one of the second unwinding apparatuses (212) to form the first electrode assembly, and the second winding portion is configured to wind the second part (201b) of the first electrode plate (201) and the second electrode plate (202) from the other of the second unwinding apparatuses (212) to form the second electrode assembly,
wherein preferably:
the second electrode plate (202) comprises a second substrate (2021) and a second active coating region (2022) applied to a surface of the second substrate (2021), wherein a second tab region (2023) extending along a length direction of the second electrode plate (202) is provided on one side of the second active coating region (2022) in a width direction of the second electrode plate (202).

8. The winding device (20) according to claim 1, wherein the winding device (20) further comprises: a first combining apparatus (271), disposed between the two third unwinding apparatuses (213) and the winding apparatus (230), wherein the first combining apparatus (271) comprises two first rotating portions disposed on a same roller, wherein the two first rotating portions correspond to respective ones of the two third unwinding apparatuses (213) and respective ones of the two winding portions in the winding apparatus (230), and each of the first rotating portions is configured to convey the first separator (203) from a corresponding third unwinding apparatus (213) to a corresponding winding portion; and/or
a second combining apparatus (272), disposed between the two fourth unwinding apparatuses (214) and the winding apparatus (230), wherein the second combining apparatus (272) comprises two second rotating portions disposed on a same roller, wherein the two second rotating portions correspond to respective ones of the two fourth unwinding apparatuses (214) and respective ones of the two winding portions in the winding apparatus (230), and each of the second rotating portions is configured to convey the second separator (204) from a corresponding fourth unwinding apparatus (214) to a corresponding winding portion.

9. The winding device (20) according to claim 8, wherein the winding device (20) further comprises: two fifth adjustment assemblies (245), corresponding to respective ones of the two third unwinding apparatuses (213), and disposed between the first combining apparatus (271) and the two third unwinding apparatuses (213), wherein each of the fifth adjustment assemblies (245) is configured to adjust transmission parameters of the first separator (203) in the winding device (20); and/or
two sixth adjustment assemblies (246), corresponding to respective ones of the two fourth unwinding apparatuses (214), and disposed between the second combining apparatus (272) and the two fourth unwinding apparatuses (214), wherein each of the sixth adjustment assemblies (246) is configured to adjust transmission parameters of the second separator (204) in the winding device (20),
wherein preferably:
the fifth adjustment assembly (245) and the sixth adjustment assembly (246) each comprise a tension adjustment assembly (2402), wherein the tension adjustment assembly (2402) in the fifth adjustment assembly (245) is configured to detect and adjust tension of the first separator (203), and the tension adjustment assembly (2402) in the sixth adjustment assembly (246) is configured to detect and adjust tension of the second separator (204).

10. A winding method (30), comprising:
S310: outputting a first electrode plate (201);
S320: cutting the first electrode plate (201) into a first part (201a) and a second part (201b) along a length direction of the first electrode plate (201);
**characterised by** further comprising:
S340: outputting a second electrode plate (202);
S350: cutting the second electrode plate (202) into a first part (202a) and a second part (202b) along a length direction of the second electrode plate (202);
outputting a first separator (203) and a second separator (204);
S330: winding the first part (201a) of the first electrode plate (201), the first separator (203), the second separator (204) and the first part (202a) of the second electrode plate (202) to form a first electrode assembly,
and at the same time, winding the second part (201b) of the first electrode plate (201), the first separator (203), the second separator (204), and the second part (202b) of the second electrode plate (202) to form a second electrode assembly.

11. The winding method (30) according to claim 10, wherein the first electrode plate (201) comprises a first substrate (2011) and two first active coating regions (2012) applied to a surface of the first substrate (2011), wherein the two first active coating regions (2012) are located on two sides of the first electrode plate (201) in a width direction respectively, and a first tab region (2013) extending along the length direction of the first electrode plate (201) is provided between the two first active coating regions (2012); and
the step S320 of cutting the first electrode plate (201) into a first part (201a) and a second part (201b) along a length direction of the first electrode plate (201) comprises:
performing cutting in the first tab region (2013) along the length direction of the first electrode plate (201), so as to cut the first electrode plate (201) into the first part (201a) and the second part (201b).

12. The winding method (30) according to claim 11, wherein the performing cutting in the first tab region (2013) along the length direction of the first electrode plate (201), so as to cut the first electrode plate (201) into the first part (201a) and the second part (201b) comprises:
performing cutting in the first tab region (2013) along a first cutting line that extends in the length direction of the first electrode plate (201), so as to obtain the first part (201a) of the first electrode plate (201) and form at least one tab of the first part (201a) of the first electrode plate (201); and
performing cutting in the first tab region (2013) along a second cutting line that extends in the length direction of the first electrode plate (201), so as to obtain the second part (201b) of the first electrode plate (201) and form at least one tab of the second part (201b) of the first electrode plate (201).

13. The winding method (30) according to claim 10, wherein
the second electrode plate (202) comprises a second substrate (2021) and a second active coating region (2022) applied to a surface of the second substrate (2021), wherein a second tab region (2023) extending along a length direction of the second electrode plate (202) is provided on each of two sides of the second active coating region (2022) in a width direction of the second electrode plate (202); and
the cutting the second electrode plate (202) into a first part (202a) and a second part (202b) along a length direction of the second electrode plate (202) comprises:
performing cutting in the second active coating region (2022) along the length direction of the second electrode plate (202), so as to cut the second electrode plate (202) into the first part (202a) and the second part (202b).

## Patentansprüche

1. Wickelvorrichtung (20), die Folgendes umfasst:
eine erste Abwickeleinrichtung (211), die konfiguriert ist, um eine erste Elektrodenplatte (201) auszugeben;
eine erste Schneideeinrichtung (220), die stromabwärtig der ersten Abwickeleinrichtung (211) angeordnet und konfiguriert ist, um die erste Elektrodenplatte (201) entlang einer Längsrichtung der ersten Elektrodenplatte (201) in einen ersten Teil (201a) und einen zweiten Teil (201b) zu schneiden;
eine Wickeleinrichtung (230), umfassend einen ersten Wickelabschnitt (231) und einen zweiten Wickelabschnitt
(232), die in der Lage sind, gleichzeitig eine Wickelbewegung auszuführen,
**dadurch gekennzeichnet, dass** sie ferner Folgendes umfasst:
eine zweite Abwickeleinrichtung (212), die konfiguriert ist, um eine zweite Elektrodenplatte (202) auszugeben;
eine zweite Schneideeinrichtung (260), die stromabwärtig der zweiten Abwickeleinrichtung (212) angeordnet und konfiguriert ist, um die zweite Elektrodenplatte (202) entlang einer Längsrichtung der zweiten Elektrodenplatte (202) in einen ersten Teil (202a) und einen zweiten Teil (202b) zu schneiden;
zwei dritte Abwickeleinrichtungen (213), wobei jede dritte Abwickeleinrichtung (213) der beiden dritten Abwickeleinrichtungen (213) konfiguriert ist, um einen ersten Separator (203) auszugeben;
zwei vierte Abwickeleinrichtungen (214), wobei jede vierte Abwickeleinrichtung (214) der beiden vierten Abwickeleinrichtungen (214) konfiguriert ist, um einen zweiten Separator (204) auszugeben;
wobei die Wickeleinrichtung (230) stromabwärtig der ersten Schneideeinrichtung (220), der zweiten Schneideeinrichtung (260), den beiden dritten Abwickeleinrichtungen (213) und den beiden vierten Abwickeleinrichtungen (214) angeordnet ist,
wobei der erste Wickelabschnitt konfiguriert ist, um den ersten Teil (201a) der ersten Elektrodenplatte (201), den ersten Separator (203) von einer der dritten Abwickeleinrichtungen (213), den zweiten Separator (204) von einer der vierten Abwickeleinrichtungen (214) und den ersten Teil (202a) der zweiten Elektrodenplatte (202) zu wickeln, um eine erste Elektrodenanordnung zu bilden, und
wobei der zweite Wickelabschnitt konfiguriert ist, um den zweiten Teil (201b) der ersten Elektrodenplatte (201), den ersten Separator (203) von der anderen der dritten Abwickeleinrichtungen (213), den zweiten Separator (204) von der anderen der vierten Abwickeleinrichtungen (214) und den zweiten Teil (202b) der zweiten Elektrodenplatte (202) zu wickeln, um eine zweite Elektrodenanordnung zu bilden.

2. Wickelvorrichtung (20) nach Anspruch 1, wobei die erste Elektrodenplatte (201) ein erstes Substrat (2011) und zwei erste aktive Beschichtungsregionen (2012) umfasst, die auf eine Oberfläche des ersten Substrats (2011) aufgebracht sind, wobei sich die beiden ersten aktiven Beschichtungsregionen (2012) jeweils auf zwei Seiten der ersten Elektrodenplatte (201) in einer Breitenrichtung befinden und zwischen den beiden ersten aktiven Beschichtungsregionen (2012) eine erste Laschenregion (2013) bereitgestellt ist, die sich entlang der Längsrichtung der ersten Elektrodenplatte (201) erstreckt; und
die erste Schneideeinrichtung (220) konfiguriert ist, um in der ersten Laschenregion (2013) entlang der Längsrichtung der ersten Elektrodenplatte (201) das Schneiden durchzuführen, um die erste Elektrodenplatte (201) in den ersten Teil (201a) und den zweiten Teil (201b) zu schneiden,
wobei vorzugsweise:
die erste Schneideeinrichtung (220) Folgendes umfasst: einen ersten Schneideabschnitt (221) und einen zweiten Schneideabschnitt (222),
wobei der erste Schneideabschnitt (221) konfiguriert ist, um in der ersten Laschenregion (2013) das Schneiden durchzuführen, um mindestens eine Lasche des ersten Teils (201a) der ersten Elektrodenplatte (201) zu bilden, und der zweite Schneideabschnitt (222) konfiguriert ist, um in der ersten Laschenregion (2013) das Schneiden durchzuführen, um mindestens eine Lasche des zweiten Teils (201b) der ersten Elektrodenplatte (201) zu bilden.

3. Wickelvorrichtung (20) nach Anspruch 1 oder 2, wobei die Wickelvorrichtung (20) ferner Folgendes umfasst: eine erste Einstellanordnung (241) und/oder eine zweite Einstellanordnung (242), die zwischen der ersten Schneideeinrichtung (220) und der Wickeleinrichtung (230) angeordnet sind, wobei
die erste Einstellanordnung (241) konfiguriert ist, um Übertragungsparameter des ersten Teils (201a) der ersten Elektrodenplatte (201) in der Wickelvorrichtung (20) einzustellen, und/oder die zweite Einstellanordnung (242) konfiguriert ist, um Übertragungsparameter des zweiten Teils (201b) der ersten Elektrodenplatte (201) in der Wickelvorrichtung (20) einzustellen,
wobei vorzugsweise:
die erste Einstellanordnung (241) und die zweite Einstellanordnung (242) jeweils eine Neuausrichtungsanordnung (2401) umfassen, wobei die Neuausrichtungsanordnung (2401) in der ersten Einstellanordnung (241) konfiguriert ist, um eine relative Position des ersten Teils (201a) der ersten Elektrodenplatte (201) in der Wickelvorrichtung (20) einzustellen, und die Neuausrichtungsanordnung (2401) in der zweiten Einstellanordnung (242) konfiguriert ist, um eine relative Position des zweiten Teils (201b) der ersten Elektrodenplatte (201) in der Wickelvorrichtung (20) einzustellen; und/oder
die erste Einstellanordnung (241) und die zweite Einstellanordnung (242) jeweils eine Spannungseinstellanordnung (2402) umfassen, wobei die Spannungseinstellanordnung (2402) in der ersten Einstellanordnung (241) konfiguriert ist, um die Spannung des ersten Teils (201a) der ersten Elektrodenplatte (201) zu erkennen und einzustellen, und die Spannungseinstellanordnung (2402) in der zweiten Einstellanordnung (242) konfiguriert ist, um die Spannung des zweiten Teils (201b) der ersten Elektrodenplatte (201) zu erkennen und einzustellen.

4. Wickelvorrichtung (20) nach einem der Ansprüche 1 bis 3, wobei die Wickelvorrichtung (20) ferner Folgendes umfasst: einen ersten Zuführungsabschnitt (251) und einen zweiten Zuführungsabschnitt (252), die stromaufwärtig der Wickelvorrichtung (230) angeordnet sind,
wobei der erste Zuführungsabschnitt (251) konfiguriert ist, um den ersten Teil (201a) der ersten Elektrodenplatte (201) zum ersten Wickelabschnitt der Wickeleinrichtung (230) zu befördern, und der zweite Zuführungsabschnitt (252) konfiguriert ist, um den zweiten Teil (201b) der ersten Elektrodenplatte (201) zum zweiten Wickelabschnitt der Wickeleinrichtung (230) zu befördern,
wobei vorzugsweise:
der erste Zuführungsabschnitt (251) Folgendes umfasst: eine erste bewegliche Rolle (2501), ein erstes Antriebselement (2502) und ein erstes Übertragungselement (2503); und der zweite Zuführungsabschnitt (252) Folgendes umfasst: eine zweite bewegliche Rolle (2504), ein zweites Antriebselement (2505) und ein zweites Übertragungselement (2506), wobei:
das erste Antriebselement (2502) konfiguriert ist, um die erste bewegliche Rolle (2501) anzutreiben, um den ersten Teil (201a) der ersten Elektrodenplatte (201) an das erste Übertragungselement (2503) zu drücken und daran zu befestigen, und das erste Übertragungselement (2503) konfiguriert ist, um den ersten Teil (201a) der ersten Elektrodenplatte (201) zu dem ersten Wickelabschnitt zu befördern;
das zweite Antriebselement (2505) konfiguriert ist, um die zweite bewegliche Rolle (2504) anzutreiben, um den zweiten Teil (201b) der ersten Elektrodenplatte (201) an das zweite Übertragungselement (2506) zu drücken und daran zu befestigen, und das zweite Übertragungselement (2506) konfiguriert ist, um den zweiten Teil (201b) der ersten Elektrodenplatte (201) zu dem zweiten Wickelabschnitt zu befördern.

5. Wickelvorrichtung (20) nach einem der Ansprüche 1 bis 4, wobei die zweite Elektrodenplatte (202) ein zweites Substrat (2021) und eine zweite aktive Beschichtungsregion (2022) umfasst, das auf eine Oberfläche des zweiten Substrats (2021) aufgebracht ist, wobei eine zweite Laschenregion (2023), die sich entlang einer Längsrichtung der zweiten Elektrodenplatte (202) erstreckt, an jeder von zwei Seiten der zweiten aktiven Beschichtungsregion (2022) in einer Breitenrichtung der zweiten Elektrodenplatte (202) bereitgestellt ist; und
wobei die zweite Schneideeinrichtung (260) konfiguriert ist, um in der zweiten aktiven Beschichtungsregion (2022) entlang der Längsrichtung der zweiten Elektrodenplatte (202) ein Schneiden durchzuführen, um die zweite Elektrodenplatte (202) in den ersten Teil (202a) und den zweiten Teil (202b) zu schneiden.

6. Wickelvorrichtung (20) nach Anspruch 5, wobei die Wickelvorrichtung (20) ferner Folgendes umfasst: eine dritte Einstellanordnung (243) und/oder eine vierte Einstellanordnung (244), die zwischen der zweiten Schneideeinrichtung (260) und der Wickeleinrichtung (230) angeordnet sind,
wobei die dritte Einstellanordnung (243) konfiguriert ist, um Übertragungsparameter des ersten Teils (202a) der zweiten Elektrodenplatte (202) in der Wickelvorrichtung (20) einzustellen, und/oder die vierte Einstellanordnung (244) konfiguriert ist, um Übertragungsparameter des zweiten Teils (202b) der zweiten Elektrodenplatte (202) in der Wickelvorrichtung (20) einzustellen,
wobei vorzugsweise:
die dritte Einstellanordnung (243) und die vierte Einstellanordnung (244) jeweils eine Neuausrichtungsanordnung (2401) umfassen, wobei die Neuausrichtungsanordnung (2401) in der dritten Einstellanordnung (243) konfiguriert ist, um eine relative Position des ersten Teils (202a) der zweiten Elektrodenplatte (202) in der Wickelvorrichtung (20) einzustellen, und die Neuausrichtungsanordnung (2401) in der vierten Einstellanordnung (244) konfiguriert ist, um eine relative Position des zweiten Teils (202b) der zweiten Elektrodenplatte (202) in der Wickelvorrichtung (20) einzustellen; und/oder
die dritte Einstellanordnung (243) und die vierte Einstellanordnung (244) jeweils eine Spannungseinstellanordnung (2402) umfassen, wobei die Spannungseinstellanordnung (2402) in der dritten Einstellanordnung (243) konfiguriert ist, um die Spannung des ersten Teils (202a) der zweiten Elektrodenplatte (202) zu erkennen und einzustellen, und die Spannungseinstellanordnung (2402) in der vierten Einstellanordnung (244) konfiguriert ist, um die Spannung des zweiten Teils (202b) der zweiten Elektrodenplatte (202) zu erkennen und einzustellen.

7. Wickelvorrichtung (20) nach einem der Ansprüche 1 bis 4, wobei die Wickelvorrichtung (20) ferner Folgendes umfasst:
zwei zweite Abwickeleinrichtungen (212), wobei jede zweite Abwickeleinrichtung (212) der beiden zweiten Abwickeleinrichtungen (212) konfiguriert ist, um eine zweite Elektrodenplatte (202) auszugeben,
wobei die Wickelvorrichtung (230) stromabwärtig der beiden zweiten Abwickeleinrichtungen (212) angeordnet ist, wobei der erste Wickelabschnitt konfiguriert ist, um den ersten Teil (201a) der ersten Elektrodenplatte (201) und die zweite Elektrodenplatte (202) von einer der zweiten Abwickeleinrichtungen (212) zu wickeln, um die erste Elektrodenanordnung zu bilden, und der zweite Wickelabschnitt konfiguriert ist, um den zweiten Teil (201b) der ersten Elektrodenplatte (201) und die zweite Elektrodenplatte (202) von der anderen der zweiten Abwickeleinrichtungen (212) zu wickeln, um die zweite Elektrodenanordnung zu bilden,
wobei vorzugsweise:
die zweite Elektrodenplatte (202) ein zweites Substrat (2021) und eine zweite aktive Beschichtungsregion (2022) umfasst, die auf eine Oberfläche des zweiten Substrats (2021) aufgebracht ist, wobei eine zweite Laschenregion (2023), die sich entlang einer Längsrichtung der zweiten Elektrodenplatte (202) erstreckt, auf einer Seite der zweiten aktiven Beschichtungsregion (2022) in einer Breitenrichtung der zweiten Elektrodenplatte (202) bereitgestellt ist.

8. Wickelvorrichtung (20) nach Anspruch 1, wobei die Wickelvorrichtung (20) ferner Folgendes umfasst: eine erste Kombinationseinrichtung (271), die zwischen den beiden dritten Abwickeleinrichtungen (213) und der Wickeleinrichtung (230) angeordnet ist, wobei die erste Kombinationseinrichtung (271) zwei erste rotierende Abschnitte umfasst, die auf derselben Rolle angeordnet sind, wobei die beiden ersten rotierenden Abschnitte jeweils einer der beiden dritten Abwickeleinrichtungen (213) und jeweils einem der beiden Wickelabschnitte in der Wickeleinrichtung (230) entsprechen, und jeder der ersten rotierenden Abschnitte konfiguriert ist, um den ersten Separator (203) von einer entsprechenden dritten Abwickeleinrichtung (213) zu einem entsprechenden Wickelabschnitt zu befördern; und/oder
eine zweite Kombinationseinrichtung (272), die zwischen den beiden vierten Abwickeleinrichtungen (214) und der Wickeleinrichtung (230) angeordnet ist, wobei die zweite Kombinationseinrichtung (272) zwei zweite rotierende Abschnitte umfasst, die auf derselben Rolle angeordnet sind, wobei die beiden zweiten rotierenden Abschnitte jeweils einer der beiden vierten Abwickeleinrichtungen (214) und jeweils einem der beiden Wickelabschnitte in der Wickeleinrichtung (230) entsprechen, und wobei jeder der zweiten rotierenden Abschnitte konfiguriert ist, um den zweiten Separator (204) von einer entsprechenden vierten Abwickeleinrichtung (214) zu einem entsprechenden Wickelabschnitt zu befördern.

9. Wickelvorrichtung (20) nach Anspruch 8, wobei die Wickelvorrichtung (20) ferner Folgendes umfasst: zwei fünfte Einstellanordnungen (245), die jeweils einer der beiden dritten Abwickeleinrichtungen (213) entsprechen und zwischen der ersten Kombinationseinrichtung (271) und den beiden dritten Abwickeleinrichtungen (213) angeordnet sind, wobei jede der fünften Einstellanordnungen (245) konfiguriert ist, um Übertragungsparameter des ersten Separators (203) in der Wickelvorrichtung (20) einzustellen; und/oder
zwei sechste Einstellanordnungen (246), die jeweils einer der beiden vierten Abwickeleinrichtungen (214) entsprechen und zwischen der zweiten Kombinationseinrichtung (272) und den beiden vierten Abwickeleinrichtungen (214) angeordnet sind, wobei jede der sechsten Einstellanordnungen (246) konfiguriert ist, um Übertragungsparameter des zweiten Separators (204) in der Wickelvorrichtung (20) einzustellen,
wobei vorzugsweise:
die fünfte Einstellanordnung (245) und die sechste Einstellanordnung (246) jeweils eine Spannungseinstellanordnung (2402) umfassen, wobei die Spannungseinstellanordnung (2402) in der fünften Einstellanordnung (245) konfiguriert ist, um die Spannung des ersten Separators (203) zu erkennen und einzustellen, und die Spannungseinstellanordnung (2402) in der sechsten Einstellanordnung (246) konfiguriert ist, um die Spannung des zweiten Separators (204) zu erkennen und einzustellen.

10. Wickelverfahren (30), das Folgendes umfasst:
S310: Ausgeben einer ersten Elektrodenplatte (201);
S320: Schneiden der ersten Elektrodenplatte (201) entlang einer Längsrichtung der ersten Elektrodenplatte (201) in einen ersten Teil (201a) und einen zweiten Teil (201b);
**dadurch gekennzeichnet, dass** es ferner Folgendes umfasst:
S340: Ausgeben einer zweiten Elektrodenplatte (202);
S350: Schneiden der zweiten Elektrodenplatte (202) entlang einer Längsrichtung der zweiten Elektrodenplatte (202) in einen ersten Teil (202a) und einen zweiten Teil (202b);
Ausgeben eines ersten Separators (203) und eines zweiten Separators (204);
S330: Wickeln des ersten Teils (201a) der ersten Elektrodenplatte (201), des ersten Separators (203), des zweiten Separators (204) und des ersten Teils (202a) der zweiten Elektrodenplatte (202) zu einer ersten Elektrodenanordnung,
und gleichzeitig Wickeln des zweiten Teils (201b) der ersten Elektrodenplatte (201), des ersten Separators (203), des zweiten Separators (204) und des zweiten Teils (202b) der zweiten Elektrodenplatte (202) zu einer zweiten Elektrodenanordnung.

11. Wickelverfahren (30) nach Anspruch 10, wobei die erste Elektrodenplatte (201) ein erstes Substrat (2011) und zwei erste aktive Beschichtungsregionen (2012) umfasst, die auf eine Oberfläche des ersten Substrats (2011) aufgebracht sind, wobei sich die beiden ersten aktiven Beschichtungsregionen (2012) jeweils auf zwei Seiten der ersten Elektrodenplatte (201) in einer Breitenrichtung befinden und zwischen den beiden ersten aktiven Beschichtungsregionen (2012) eine erste Laschenregion (2013) bereitgestellt ist, die sich entlang der Längsrichtung der ersten Elektrodenplatte (201) erstreckt; und
der Schritt S320 des Schneidens der ersten Elektrodenplatte (201) entlang einer Längsrichtung der ersten Elektrodenplatte (201) in einen ersten Teil (201a) und einen zweiten Teil (201b) Folgendes umfasst:
Durchführen des Schneidens in der ersten Laschenregion (2013) entlang der Längsrichtung der ersten Elektrodenplatte (201), um die erste Elektrodenplatte (201) in den ersten Teil (201a) und den zweiten Teil (201b) zu schneiden.

12. Wickelverfahren (30) nach Anspruch 11, wobei das Durchführen des Schneidens in der ersten Laschenregion (2013) entlang der Längsrichtung der ersten Elektrodenplatte (201), um die erste Elektrodenplatte (201) in den ersten Teil (201a) und den zweiten Teil (201b) zu schneiden, Folgendes umfasst:
Durchführen des Schneidens in der ersten Laschenregion (2013) entlang einer ersten Schnittlinie, die sich in Längsrichtung der ersten Elektrodenplatte (201) erstreckt, um den ersten Teil (201a) der ersten Elektrodenplatte (201) zu erhalten und mindestens eine Lasche des ersten Teils (201a) der ersten Elektrodenplatte (201) zu bilden; und
Durchführen des Schneidens in der ersten Laschenregion (2013) entlang einer zweiten Schnittlinie, die sich in Längsrichtung der ersten Elektrodenplatte (201) erstreckt, um den zweiten Teil (201b) der ersten Elektrodenplatte (201) zu erhalten und mindestens eine Lasche des zweiten Teils (201b) der ersten Elektrodenplatte (201) zu bilden.

13. Wickelverfahren (30) nach Anspruch 10, wobei
die zweite Elektrodenplatte (202) ein zweites Substrat (2021) und eine zweite aktive Beschichtungsregion (2022) umfasst, die auf eine Oberfläche des zweiten Substrats (2021) aufgebracht ist, wobei eine zweite Laschenregion (2023), die sich entlang einer Längsrichtung der zweiten Elektrodenplatte erstreckt (202), an jeder von zwei Seiten der zweiten aktiven Beschichtungsregion (2022) in einer Breitenrichtung der zweiten Elektrodenplatte (202) bereitgestellt ist; und
das Schneiden der zweiten Elektrodenplatte (202) in einen ersten Teil (202a) und einen zweiten Teil (202b) entlang einer Längsrichtung der zweiten Elektrodenplatte (202) Folgendes umfasst:
Durchführen des Schneidens in der zweiten aktiven Beschichtungsregion (2022) entlang der Längsrichtung der zweiten Elektrodenplatte (202), um die zweite Elektrodenplatte (202) in den ersten Teil (202a) und den zweiten Teil (202b) zu schneiden.

## Revendications

1. Dispositif d'enroulement (20), comprenant :
un premier appareil de déroulement (211), conçu pour fournir une première plaque d'électrode (201) ;
un premier appareil de coupe (220), disposé en aval du premier appareil de déroulement (211), et conçu pour couper la première plaque d'électrode (201) en une première partie (201a) et une deuxième partie (201b) le long d'une direction de longueur de la première plaque d'électrode (201) ;
un appareil d'enroulement (230) comprenant une première partie d'enroulement (231) et une deuxième partie d'enroulement (232) permettant un mouvement d'enroulement simultané,
**caractérisé en ce qu'**il comprend en outre :
un deuxième appareil de déroulement (212), conçu pour fournir une deuxième plaque d'électrode (202) ;
un deuxième appareil de coupe (260), disposé en aval du deuxième appareil de déroulement (212), et conçu pour couper la deuxième plaque d'électrode (202) en une première partie (202a) et une deuxième partie (202b) le long d'une direction de longueur de la deuxième plaque d'électrode (202) ;
deux troisièmes appareils de déroulement (213), chaque troisième appareil de déroulement (213) des deux troisièmes appareils de déroulement (213) étant conçu pour fournir un premier séparateur (203) ;
deux quatrièmes appareils de déroulement (214), chaque quatrième appareil de déroulement (214) des deux quatrièmes appareils de déroulement (214) étant conçu pour fournir un deuxième séparateur (204) ;
dans lequel l'appareil d'enroulement (230) est disposé en aval du premier appareil de coupe (220), du deuxième appareil de coupe (260), des deux troisièmes appareils de déroulement (213) et des deux quatrièmes appareils de déroulement (214),
dans lequel la première partie d'enroulement est conçue pour enrouler la première partie (201a) de la première plaque d'électrode (201), le premier séparateur (203) provenant de l'un des troisièmes appareils de déroulement (213), le deuxième séparateur (204) provenant de l'un des quatrièmes appareils de déroulement (214), et la première partie (202a) de la deuxième plaque d'électrode (202) pour former un premier ensemble électrode, et
dans lequel la deuxième partie d'enroulement est conçue pour enrouler la deuxième partie (201b) de la première plaque d'électrode (201), le premier séparateur (203) provenant de l'autre des troisièmes appareils de déroulement (213), le deuxième séparateur (204) provenant de l'autre des quatrièmes appareils de déroulement (214), et la deuxième partie (202b) de la deuxième plaque d'électrode (202) pour former un deuxième ensemble électrode.

2. Dispositif d'enroulement (20) selon la revendication 1, dans lequel la première plaque d'électrode (201) comprend un premier substrat (2011) et deux premières régions de revêtement actif (2012) appliquées à une surface du premier substrat (2011), les deux premières régions de revêtement actif (2012) étant situées sur deux côtés de la première plaque d'électrode (201) dans une direction de largeur respectivement, et une première région de patte (2013) s'étendant le long de la direction de longueur de la première plaque d'électrode (201) étant fournie entre les deux premières régions de revêtement actif (2012) ; et
le premier appareil de coupe (220) est conçu pour effectuer une coupe dans la première région de patte (2013) le long de la direction de longueur de la première plaque d'électrode (201), de sorte à couper la première plaque d'électrode (201) en la première partie (201a) et la deuxième partie (201b),
dans lequel de préférence :
le premier appareil de coupe (220) comprend : une première partie de coupe (221) et une deuxième partie de coupe (222),
la première partie de coupe (221) étant conçue pour effectuer une coupe dans la première région de patte (2013), de sorte à former au moins une patte de la première partie (201a) de la première plaque d'électrode (201), et la deuxième partie de coupe (222) étant conçue pour effectuer une coupe dans la première région de patte (2013), de sorte à former au moins une patte de la deuxième partie (201b) de la première plaque d'électrode (201).

3. Dispositif d'enroulement (20) selon la revendication 1 ou 2, le dispositif d'enroulement (20) comprenant en outre : un premier ensemble de réglage (241) et/ou un deuxième ensemble de réglage (242), disposés entre le premier appareil de coupe (220) et l'appareil d'enroulement (230), dans lequel
le premier ensemble de réglage (241) est conçu pour régler des paramètres de transmission de la première partie (201a) de la première plaque d'électrode (201) dans le dispositif d'enroulement (20), et/ou, le deuxième ensemble de réglage (242) est conçu pour régler des paramètres de transmission de la deuxième partie (201b) de la première plaque d'électrode (201) dans le dispositif d'enroulement (20),
dans lequel de préférence :
le premier ensemble de réglage (241) et le deuxième ensemble de réglage (242) comprennent chacun un ensemble de ré-alignement (2401), l'ensemble de ré-alignement (2401) du premier ensemble de réglage (241) étant conçu pour régler une position relative de la première partie (201a) de la première plaque d'électrode (201) dans le dispositif d'enroulement (20), et l'ensemble de ré-alignement (2401) du deuxième ensemble de réglage (242) étant conçu pour régler une position relative de la deuxième partie (201b) de la première plaque d'électrode (201) dans le dispositif d'enroulement (20) ; et/ou
le premier ensemble de réglage (241) et le deuxième ensemble de réglage (242) comprennent chacun un ensemble de réglage de tension (2402), l'ensemble de réglage de tension (2402) du premier ensemble de réglage (241) étant conçu pour détecter et régler une tension de la première partie (201a) de la première plaque d'électrode (201), et l'ensemble de réglage de tension (2402) du deuxième ensemble de réglage (242) étant conçu pour détecter et régler une tension de la deuxième partie (201b) de la première plaque d'électrode (201).

4. Dispositif d'enroulement (20) selon l'une quelconque des revendications 1 à 3, le dispositif d'enroulement (20) comprenant en outre : une première partie d'alimentation (251) et une deuxième partie d'alimentation (252), disposées en amont de l'appareil d'enroulement (230),
la première partie d'alimentation (251) étant conçue pour convoyer la première partie (201a) de la première plaque d'électrode (201) vers la première partie d'enroulement de l'appareil d'enroulement (230), et la deuxième partie d'alimentation (252) étant conçue pour convoyer la deuxième partie (201b) de la première plaque d'électrode (201) vers la deuxième partie d'enroulement de l'appareil d'enroulement (230),
dans lequel de préférence :
la première partie d'alimentation (251) comprend : un premier rouleau de déplacement (2501), un premier élément d'entraînement (2502), et un premier élément de transmission (2503) ; et la deuxième partie d'alimentation (252) comprend : un deuxième rouleau de déplacement (2504), un deuxième élément d'entraînement (2505), et un deuxième élément de transmission (2506), dans lequel :
le premier élément d'entraînement (2502) est conçu pour entraîner le premier rouleau de déplacement (2501) afin de presser et fixer la première partie (201a) de la première plaque d'électrode (201) au premier élément de transmission (2503), et le premier élément de transmission (2503) est conçu pour convoyer la première partie (201a) de la première plaque d'électrode (201) vers la première partie d'enroulement ;
le deuxième élément d'entraînement (2505) est conçu pour entraîner le deuxième rouleau de déplacement (2504) afin de presser et fixer la deuxième partie (201b) de la première plaque d'électrode (201) au deuxième élément de transmission (2506), et le deuxième élément de transmission (2506) est conçu pour convoyer la deuxième partie (201b) de la première plaque d'électrode (201) vers la deuxième partie d'enroulement.

5. Dispositif d'enroulement (20) selon l'une quelconque des revendications 1 à 4, dans lequel la deuxième plaque d'électrode (202) comprend un deuxième substrat (2021) et une deuxième région de revêtement actif (2022) appliquée à une surface du deuxième substrat (2021), une deuxième région de patte (2023) s'étendant le long d'une direction de longueur de la deuxième plaque d'électrode (202) étant fournie sur chacun de deux côtés de la deuxième région de revêtement actif (2022) dans une direction de largeur de la deuxième plaque d'électrode (202) ; et
dans lequel le deuxième appareil de coupe (260) est conçu pour effectuer une coupe dans la deuxième région de revêtement actif (2022) le long de la direction de longueur de la deuxième plaque d'électrode (202), de sorte à couper la deuxième plaque d'électrode (202) en la première partie (202a) et la deuxième partie (202b).

6. Dispositif d'enroulement (20) selon la revendication 5, le dispositif d'enroulement (20) comprenant en outre : un troisième ensemble de réglage (243) et/ou un quatrième ensemble de réglage (244), disposés entre le deuxième appareil de coupe (260) et l'appareil d'enroulement (230),
dans lequel le troisième ensemble de réglage (243) est conçu pour régler des paramètres de transmission de la première partie (202a) de la deuxième plaque d'électrode (202) dans le dispositif d'enroulement (20), et/ou, le quatrième ensemble de réglage (244) est conçu pour régler des paramètres de transmission de la deuxième partie (202b) de la deuxième plaque d'électrode (202) dans le dispositif d'enroulement (20),
dans lequel de préférence :
le troisième ensemble de réglage (243) et le quatrième ensemble de réglage (244) comprennent chacun un ensemble de ré-alignement (2401), l'ensemble de ré-alignement (2401) du troisième ensemble de réglage (243) étant conçu pour régler une position relative de la première partie (202a) de la deuxième plaque d'électrode (202) dans le dispositif d'enroulement (20), et l'ensemble de ré-alignement (2401) du quatrième ensemble de réglage (244) étant conçu pour régler une position relative de la deuxième partie (202b) de la deuxième plaque d'électrode (202) dans le dispositif d'enroulement (20) ; et/ou
le troisième ensemble de réglage (243) et le quatrième ensemble de réglage (244) comprennent chacun un ensemble de réglage de tension (2402), l'ensemble de réglage de tension (2402) du troisième ensemble de réglage (243) étant conçu pour détecter et régler une tension de la première partie (202a) de la deuxième plaque d'électrode (202), et l'ensemble de réglage de tension (2402) du quatrième ensemble de réglage (244) étant conçu pour détecter et régler une tension de la deuxième partie (202b) de la deuxième plaque d'électrode (202).

7. Dispositif d'enroulement (20) selon l'une quelconque des revendications 1 à 4, le dispositif d'enroulement (20) comprenant en outre :
deux deuxièmes appareils de déroulement (212), chaque deuxième appareil de déroulement (212) des deux deuxièmes appareils de déroulement (212) étant conçu pour fournir une deuxième plaque d'électrode (202),
dans lequel l'appareil d'enroulement (230) est disposé en aval des deux deuxièmes appareils de déroulement (212), la première partie d'enroulement étant conçue pour enrouler la première partie (201a) de la première plaque d'électrode (201) et la deuxième plaque d'électrode (202) provenant de l'un des deuxièmes appareils de déroulement (212) pour former le premier ensemble électrode, et la deuxième partie d'enroulement étant conçue pour enrouler la deuxième partie (201b) de la première plaque d'électrode (201) et la deuxième plaque d'électrode (202) provenant de l'autre des deuxièmes appareils de déroulement (212) pour former le deuxième ensemble électrode,
dans lequel de préférence :
la deuxième plaque d'électrode (202) comprend un deuxième substrat (2021) et une deuxième région de revêtement actif (2022) appliquée à une surface du deuxième substrat (2021), une deuxième région de patte (2023) s'étendant le long d'une direction de longueur de la deuxième plaque d'électrode (202) étant fournie sur un côté de la deuxième région de revêtement actif (2022) dans une direction de largeur de la deuxième plaque d'électrode (202).

8. Dispositif d'enroulement (20) selon la revendication 1, le dispositif d'enroulement (20) comprenant en outre : un premier appareil de combinaison (271), disposé entre les deux troisièmes appareils de déroulement (213) et l'appareil d'enroulement (230), le premier appareil de combinaison (271) comprenant deux premières parties rotatives disposées sur un même rouleau, les deux premières parties rotatives correspondant aux appareils respectifs des deux troisièmes appareils de déroulement (213) et aux parties respectives des deux parties d'enroulement de l'appareil d'enroulement (230), et chacune des premières parties rotatives est conçue pour convoyer le premier séparateur (203) depuis un troisième appareil de déroulement (213) correspondant jusqu'à une partie d'enroulement correspondante ; et/ou
un deuxième appareil de combinaison (272), disposé entre les deux quatrièmes appareils de déroulement (214) et l'appareil d'enroulement (230), le deuxième appareil de combinaison (272) comprenant deux deuxièmes parties rotatives disposées sur un même rouleau, les deux deuxièmes parties rotatives correspondant aux appareils respectifs des deux quatrièmes appareils de déroulement (214) et aux parties respectives des deux parties d'enroulement de l'appareil d'enroulement (230), et chacune des deuxièmes parties rotatives est conçue pour convoyer le deuxième séparateur (204) depuis un quatrième appareil de déroulement (214) correspondant jusqu'à une partie d'enroulement correspondante.

9. Dispositif d'enroulement (20) selon la revendication 8, le dispositif d'enroulement (20) comprenant en outre : deux cinquièmes ensembles de réglage (245), correspondant aux appareils respectifs des deux troisièmes appareils de déroulement (213), et disposés entre le premier appareil de combinaison (271) et les deux troisièmes appareils de déroulement (213), chacun des cinquièmes ensembles de réglage (245) étant conçu pour régler des paramètres de transmission du premier séparateur (203) du dispositif d'enroulement (20) ; et/ou
deux sixièmes ensembles de réglage (246), correspondant aux appareils respectifs des deux quatrièmes appareils de déroulement (214), et disposés entre le deuxième appareil de combinaison (272) et les deux quatrièmes appareils de déroulement (214), chacun des sixièmes ensembles de réglage (246) étant conçu pour régler des paramètres de transmission du deuxième séparateur (204) du dispositif d'enroulement (20),
dans lequel de préférence :
le cinquième ensemble de réglage (245) et le sixième ensemble de réglage (246) comprennent chacun un ensemble de réglage de tension (2402), l'ensemble de réglage de tension (2402) du cinquième ensemble de réglage (245) étant conçu pour détecter et régler une tension du premier séparateur (203), et l'ensemble de réglage de tension (2402) du sixième ensemble de réglage (246) étant conçu pour détecter et régler une tension du deuxième séparateur (204).

10. Procédé d'enroulement (30), comprenant les étapes consistant à :
S310 : fournir une première plaque d'électrode (201) ;
S320 : couper la première plaque d'électrode (201) en une première partie (201a) et une deuxième partie (201b) le long d'une direction de longueur de la première plaque d'électrode (201) ;
**caractérisé en ce qu'**il comprend en outre les étapes consistant à :
S340 : fournir une deuxième plaque d'électrode (202) ;
S350 : couper la deuxième plaque d'électrode (202) en une première partie (202a) et une deuxième partie (202b) le long d'une direction de longueur de la deuxième plaque d'électrode (202) ;
fournir un premier séparateur (203) et un deuxième séparateur (204) ;
S330 : enrouler la première partie (201a) de la première plaque d'électrode (201), le premier séparateur (203), le deuxième séparateur (204) et la première partie (202a) de la deuxième plaque d'électrode (202) pour former un premier ensemble électrode,
et dans le même temps, enrouler la deuxième partie (201b) de la première plaque d'électrode (201), le premier séparateur (203), le deuxième séparateur (204), et la deuxième partie (202b) de la deuxième plaque d'électrode (202) pour former un deuxième ensemble électrode.

11. Procédé d'enroulement (30) selon la revendication 10, dans lequel la première plaque d'électrode (201) comprend un premier substrat (2011) et deux premières régions de revêtement actif (2012) appliquées à une surface du premier substrat (2011), les deux premières régions de revêtement actif (2012) étant situées sur deux côtés de la première plaque d'électrode (201) dans une direction de largeur respectivement, et une première région de patte (2013) s'étendant le long de la direction de longueur de la première plaque d'électrode (201) étant fournie entre les deux premières régions de revêtement actif (2012) ; et
l'étape S320 de coupe de la première plaque d'électrode (201) en une première partie (201a) et une deuxième partie (201b) le long d'une direction de longueur de la première plaque d'électrode (201) comprend l'étape consistant à :
effectuer une coupe dans la première région de patte (2013) le long de la direction de longueur de la première plaque d'électrode (201), de sorte à couper la première plaque d'électrode (201) en la première partie (201a) et la deuxième partie (201b).

12. Procédé d'enroulement (30) selon la revendication 11, dans lequel la réalisation de la coupe dans la première région de patte (2013) le long de la direction de longueur de la première plaque d'électrode (201), de sorte à couper la première plaque d'électrode (201) en la première partie (201a) et la deuxième partie (201b) comprend les étapes consistant à :
effectuer une coupe dans la première région de patte (2013) le long d'une première ligne de coupe qui s'étend dans la direction de longueur de la première plaque d'électrode (201), de sorte à obtenir la première partie (201a) de la première plaque d'électrode (201) et former au moins une patte de la première partie (201a) de la première plaque d'électrode (201) ; et
effectuer une coupe dans la première région de patte (2013) le long d'une deuxième ligne de coupe qui s'étend dans la direction de longueur de la première plaque d'électrode (201), de sorte à obtenir la deuxième partie (201b) de la première plaque d'électrode (201) et former au moins une patte de la deuxième partie (201b) de la première plaque d'électrode (201).

13. Procédé d'enroulement (30) selon la revendication 10, dans lequel
la deuxième plaque d'électrode (202) comprend un deuxième substrat (2021) et une deuxième région de revêtement actif (2022) appliquée à une surface du deuxième substrat (2021), une deuxième région de patte (2023) s'étendant le long d'une direction de longueur de la deuxième plaque d'électrode (202) étant fournie sur chacun de deux côtés de la deuxième région de revêtement actif (2022) dans une direction de largeur de la deuxième plaque d'électrode (202) ; et
la coupe de la deuxième plaque d'électrode (202) en une première partie (202a) et une deuxième partie (202b) le long d'une direction de longueur de la deuxième plaque d'électrode (202) comprend l'étape consistant à :
effectuer une coupe dans la deuxième région de revêtement actif (2022) le long de la direction de longueur de la deuxième plaque d'électrode (202), de sorte à couper la deuxième plaque d'électrode (202) en la première partie (202a) et la deuxième partie (202b).
